(19) Europäisches Patentamt / European Patent Office / Office européen des brevets

(11) **EP 4 586 091 A1**

(12) **EUROPEAN PATENT APPLICATION**
published in accordance with Art. 153(4) EPC

(43) Date of publication:
**16.07.2025 Bulletin 2025/29**

(21) Application number: **23870477.9**

(22) Date of filing: **19.09.2023**

(51) International Patent Classification (IPC):
*G06F 9/50* $^{(2006.01)}$

(52) Cooperative Patent Classification (CPC):
**G06F 9/50; G06F 18/214; G06F 18/22; G06F 18/24; H04W 4/70**

(86) International application number:
**PCT/CN2023/119662**

(87) International publication number:
**WO 2024/067245 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 CN 202211197193**

(71) Applicant: **Huawei Technologies Co., Ltd.**
**Shenzhen, Guangdong 518129 (CN)**

(72) Inventors:
• **CHAI, Xiaomeng**
  **Shenzhen, Guangdong 518129 (CN)**
• **SUN, Yan**
  **Shenzhen, Guangdong 518129 (CN)**
• **PANG, Jiyong**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **MODEL MATCHING METHOD AND COMMUNICATION DEVICE**

(57) Embodiments of this application provide a model matching method and a communication apparatus. The method includes: receiving an identifier of a first artificial intelligence AI model from a first communication apparatus; and determining, based on the identifier of the first AI model, whether a second AI model is deployed on a second communication apparatus, where the second AI model is an AI model that matches the first AI model. In this way, an identifier of an AI model can be exchanged to determine, based on the identifier of the AI model, an AI model that matches the AI model.

600

Receive an identifier of a first AI model from a first communication apparatus — 610

Determine, based on the identifier of the first AI model, whether a second AI model is deployed on a second communication apparatus, where the second AI model is an AI model that matches the first AI model — 620

FIG. 6

**Description**

This application claims priority to Chinese Patent Application No. 202211197193.5, filed with the China National Intellectual Property Administration on September 29, 2022 and entitled "MODEL MATCHING METHOD AND COMMUNICATION APPARATUS", which is incorporated herein by reference in its entirety.

**TECHNICAL FIELD**

This application relates to the field of communication technologies, and more specifically, to a model matching method and a communication apparatus.

**BACKGROUND**

To cope with the vision of inclusive intelligence in the future, intelligence is further evolved at a wireless network architecture layer, and artificial intelligence (artificial intelligence, AI) is to be deeply integrated with a wireless network. A two-sided model is used as an example. A plurality of AI submodels forming the two-sided model may be deployed on different communication apparatuses. The submodels deployed on the different communication apparatuses need to be matched, so that some communication tasks are jointly performed by using the AI submodels deployed on the different communication apparatuses. Therefore, how to match submodels deployed on different communication apparatuses is a to-be-resolved problem.

**SUMMARY**

This application provides a model matching method and a communication apparatus, to implement matching between AI models deployed on different communication apparatuses.

According to a first aspect, a model matching method is provided. The method may be performed by a communication apparatus, or may be performed by a chip or a circuit used in the communication apparatus. The communication apparatus may be a second communication apparatus, or a third communication apparatus different from the second communication apparatus. This is not limited in this application.

The method may include: receiving an identifier of a first artificial intelligence AI model from a first communication apparatus; and determining, based on the identifier of the first AI model, whether a second AI model is deployed on the second communication apparatus, where the second AI model is an AI model that matches the first AI model.

According to the foregoing technical solution, the communication apparatuses may exchange the identifier of the AI model to perform AI model matching. For example, the first communication apparatus sends the identifier of the first AI model to the second communication apparatus, and the second communication apparatus may identify the first AI model based on the identifier of the first AI model, to determine whether the AI model that matches the first AI model is deployed on the second communication apparatus. In this way, AI model matching can be implemented. In addition, the identifier of the AI model instead of the AI model can be transmitted, thereby protecting privacy of the AI model and reducing signaling overheads caused by transmission of the AI model.

With reference to the first aspect, in some implementations of the first aspect, the determining, based on the identifier of the first AI model, whether a second AI model is deployed on the second communication apparatus includes: determining, based on the identifier of the first AI model and an association relationship, whether the second AI model is deployed on the second communication apparatus, where the association relationship represents a relationship between identifiers of AI models that match each other.

According to the foregoing technical solution, the identifiers of the AI models that match each other have an association relationship. In this way, when it is determined, based on the identifier of the first AI model, whether the second AI model that matches the first AI model is deployed, whether the second AI model that matches the first AI model is deployed on the second communication apparatus may be determined based on both the association relationship and the identifier of the first AI model. For example, it may be first determined, based on the association relationship, that the AI model that matches the first AI model is the second AI model, and then whether the second AI model is deployed on the second communication apparatus is determined. For another example, which AI models are deployed on the second communication apparatus may be first determined, and then whether the AI models deployed on the second communication apparatus include an AI model that matches the first AI model is determined based on the association relationship.

With reference to the first aspect, in some implementations of the first aspect, the method further includes: when determining that the second AI model is not deployed on the second communication apparatus, sending first feedback information to the first communication apparatus, where the first feedback information is used to feed back that the second AI model is not deployed on the second communication apparatus; or when it is determined that the second AI model is deployed on the second communication apparatus, sending second feedback information to the first communication apparatus, where the second feedback information is used to feed back that the second AI model is deployed on the second communication apparatus.

With reference to the first aspect, in some implementations of the first aspect, when it is determined that the second AI model is deployed on the second communication apparatus, the method further includes: sending an identifier of the second AI model to the first communication apparatus, where the identifier of the second AI model is used by the first communication apparatus to determine whether the first AI model matches the second AI model.

According to the foregoing technical solution, if it is determined that the second AI model that matches the first AI model is deployed on the second communication apparatus, the identifier of the second AI model may be sent to the first communication apparatus, so that the first communication apparatus can determine again whether the first AI model matches the second AI model. In this way, at least two communication apparatuses perform an AI model matching operation, thereby reducing a probability that an AI model matching error occurs.

With reference to the first aspect, in some implementations of the first aspect, the second AI model belongs to a first group of AI models, and the sending an identifier of the second AI model to the first communication apparatus includes: sending an identifier of at least one AI model in the first group of AI models to the first communication apparatus.

In an example, the sending an identifier of the second AI model to the first communication apparatus includes: sending, to the first communication apparatus, the identifier of the second AI model and an identifier of at least one AI model other than the second AI model in the first group of AI models.

In another example, the sending an identifier of the second AI model to the first communication apparatus includes: sending a group identifier of the first group of AI models to the first communication apparatus, where the group identifier of the first AI group model is an identifier of an AI model group. In an example, an identifier of each AI model in the AI model group may be obtained based on the group identifier.

According to the foregoing technical solution, if the second AI model belongs to a group of AI models (for example, denoted as the first group of AI models), the identifier of the at least one AI model in the first group of AI models or the group identifier of the first group of AI models may be sent to the first communication apparatus. In this way, the first communication apparatus may determine, based on the identifier of the at least one AI model or the group identifier of the first group of AI models, whether the first AI model matches the at least one AI model in the first group of AI models.

With reference to the first aspect, in some implementations of the first aspect, AI models in the first group of AI models satisfy: when input information of the AI models in the first group of AI models is the same, output information is the same or a difference between output information falls within a preset range.

With reference to the first aspect, in some implementations of the first aspect, when it is determined that the second AI model is not deployed on the second communication apparatus, the method further includes: sending an identifier of a fourth AI model to the first communication apparatus, where the identifier of the fourth AI model is used by the first communication apparatus to determine whether the fourth AI model matches at least one AI model deployed on the first communication apparatus.

For example, the fourth AI model is an AI model deployed on the second communication apparatus.

With reference to the first aspect, in some implementations of the first aspect, the fourth AI model belongs to a third group of AI models, and the sending an identifier of a fourth AI model to the first communication apparatus includes: sending an identifier of at least one AI model in the third group of AI models to the first communication apparatus.

In an example, the sending an identifier of a fourth AI model to the first communication apparatus includes: sending the identifier of the fourth AI model and an identifier of at least one AI model other than the fourth AI model in the third group of AI models to the first communication apparatus.

In another example, the sending an identifier of a fourth AI model to the first communication apparatus includes: sending a group identifier of the third group of AI models to the first communication apparatus.

According to the foregoing technical solution, if the fourth AI model belongs to a group of AI models (for example, denoted as the third group of AI models), the identifier of the at least one AI model in the third group of AI models may be sent to the first communication apparatus. In this way, the first communication apparatus may determine, based on the identifier of the at least one AI model in the third group of AI models, whether an AI model that matches the at least one AI model in the third group of AI models is deployed on the first communication apparatus.

With reference to the first aspect, in some implementations of the first aspect, AI models in the third group of AI models satisfy: when input information of the AI models in the third group of AI models is the same, output information is the same or a difference between output information falls within a preset range.

With reference to the first aspect, in some implementations of the first aspect, the second AI model is an AI model that matches at least one AI model in a second group of AI models, and the second group of AI models includes the first AI model; the receiving an identifier of a first AI model from a first communication apparatus includes: receiving an identifier of at least one AI model in the second group of AI models from the first communication apparatus; and the determining, based on the identifier of the first AI model, whether a second AI model is deployed on the second communication apparatus includes: determining, based on the identifier of the at least one AI model in the second group of AI models, whether the second AI model is deployed on the second communication apparatus.

In an example, the receiving an identifier of a first AI model from a first communication apparatus includes: receiving the identifier of the first AI model and an identifier of at least one AI model other than the first AI model in the second group of AI models from the first communication apparatus.

In another example, the receiving an identifier of a first AI model from a first communication apparatus includes: receiving a group identifier of the second group of AI models from the first communication apparatus. The group identifier of the second AI group model is an identifier of an AI model group. In an example, an identifier of each AI model in the AI model group may be obtained based on the group identifier.

According to the foregoing technical solution, the second AI model may be an AI model that matches at least one AI model in a group of AI models (for example, denoted as the second group of AI models). In this way, when it is determined whether the second AI model is deployed on the second communication apparatus, provided that it is determined that the AI model deployed on the second communication apparatus matches at least one AI model in the second group of AI models, it may be considered that the AI model deployed on the second communication apparatus matches all AI models in the second group of AI models.

With reference to the first aspect, in some implementations of the first aspect, the second group of AI models includes the first AI model and a third AI model, and a priority of the first AI model is higher than a priority of the third AI model; and the determining, based on the identifier of the first AI model and the identifier of the at least one AI model other than the first AI model in the second group of AI models, whether the second AI model is deployed on the second communication apparatus includes: when it is determined, based on the identifier of the first AI model, that the second AI model is not deployed on the second communication apparatus, determining, based on an identifier of the third AI model, whether the second AI model is deployed on the second communication apparatus.

According to the foregoing technical solution, priorities of AI models in the AI model group may be different. In this way, when matching is performed based on identifiers of the AI models in the AI model group, matching may be performed sequentially based on the priorities.

With reference to the first aspect, in some implementations of the first aspect, AI models in the second group of AI models satisfy: when input information of the AI models in the second group of AI models is the same, output information is the same or a difference between output information falls within a preset range.

With reference to the first aspect, in some implementations of the first aspect, the identifier of the first AI model indicates at least one of the following: a type of the first communication apparatus to which the first AI model belongs, an identifier of the first communication apparatus to which the first AI model belongs, a vendor of the first communication apparatus to which the first AI model belongs, a function of the first AI model, a scenario to which the first AI model is applicable, a dataset of the first AI model, a communication parameter to which the first AI model is applicable, or a version of the first AI model.

For example, the type identifier of the first communication apparatus to which the first AI model belongs indicates a type of a communication apparatus that trains and/or uses the first AI model.

For example, the identifier of the first communication apparatus to which the first AI model belongs indicates a communication apparatus that trains and/or uses the first AI model.

For example, the vendor identifier of the first communication apparatus to which the first AI model belongs indicates a vendor that trains and/or uses the first AI model.

For example, the function identifier of the first AI model indicates a function of the first AI model. The function of the first AI model may be understood as, for example, a problem that can be resolved by the first AI model, or a task that can be executed by the first AI model.

For example, the scenario identifier to which the first AI model is applicable indicates a scenario to which the first AI model is applicable, for example, an indoor scenario, an outdoor scenario, an urban scenario, or a suburban scenario.

For example, the dataset identifier of the first AI model indicates a dataset based on which the first AI model is obtained through training. In an example, there may be a correspondence between the dataset identifier and the scenario identifier.

For example, the communication parameter identifier to which the first AI model is applicable indicates a radio parameter configuration to which the first AI model is applicable. The radio parameter configuration may include, for example, at least one of the following configurations: an antenna configuration, a bandwidth, a rank, CSI feedback overheads, a reference signal configuration, a carrier frequency, or a subcarrier spacing.

For example, the version identifier of the first AI model indicates a version of the first AI model. Versions of AI models may be different versions of a same AI model, or may be different versions of different AI models. In a possible manner, the version identifier may indicate one or two of complexity or performance of the AI model. For example, the version identifier may include a complexity identifier, a performance identifier, or a complexity identifier and a performance identifier.

With reference to the first aspect, in some implementations of the first aspect, the identifier of the first AI model is predefined, or the identifier of the first AI model is configured by a communication apparatus.

That the identifier of the first AI model is configured by a communication apparatus includes: the identifier of the first AI model is configured by the first communication apparatus, or the identifier of the first AI model is configured by another communication apparatus.

According to the foregoing technical solution, the identifier of the first AI model may be predefined, may be determined by the first communication apparatus, or may be determined by another apparatus. This is not limited.

With reference to the first aspect, in some implementations of the first aspect, the method further includes: obtaining a validity period of the identifier of the first AI model; and the determining, based on the identifier of the first AI model, whether a second AI model is deployed on the second communication apparatus includes: when it is determined, based on the validity period of the identifier of the first AI model, that the identifier of the first AI model is valid, determining, based on the identifier of the first AI model, whether the second AI model is deployed on the second communication apparatus.

According to a second aspect, a model matching method is provided. The method may be performed by a communication apparatus, or may be performed by a chip or a circuit used in the communication apparatus. This is not limited in this application. For ease of description, the following provides descriptions by using an example in which a first communication apparatus performs the method.

The method may include: The first communication apparatus sends an identifier of a first artificial intelligence AI model, where the identifier of the first AI model is used to determine whether a second AI model that matches the first AI model is deployed on a second communication apparatus. The first communication apparatus determines, based on a response, whether the second AI model is deployed on the second communication apparatus.

With reference to the second aspect, in some implementations of the second aspect, the method further includes: The first communication apparatus receives first feedback information, where the first feedback information is used to feed back that the second AI model is not deployed on the second communication apparatus. The determining, based on a response of the second communication apparatus, whether the second AI model is deployed on the second communication apparatus includes: determining, based on the first feedback information, that the second AI model is not deployed on the second communication apparatus.

With reference to the second aspect, in some implementations of the second aspect, the method further includes: The first communication apparatus receives second feedback information, where the second feedback information is used to feed back that the second AI model is deployed on the second communication apparatus. The determining, based on a response of the second communication apparatus, whether the second AI model is deployed on the second communication apparatus includes: determining, based on the second feedback information, that the second AI model is deployed on the second communication apparatus.

With reference to the second aspect, in some implementations of the second aspect, after the first communication apparatus sends the identifier of the first AI model, the method further includes: The first communication apparatus receives an identifier of the second AI model. The first communication apparatus determines, based on the identifier of the second AI model, whether the first AI model matches the second AI model.

With reference to the second aspect, in some implementations of the second aspect, the second AI model belongs to a first group of AI models. That the first communication apparatus receives an identifier of the second AI model includes: The first communication apparatus receives the identifier of the second AI model and an identifier of at least one AI model other than the second AI model in the first group of AI models. That the first communication apparatus determines, based on the identifier of the second AI model, whether the first AI model matches the second AI model includes: The first communication apparatus determines, based on the identifier of the second AI model and the identifier of the at least one AI model other than the second AI model in the first group of AI models, whether the first AI model matches the at least one AI model in the first group of AI models.

With reference to the second aspect, in some implementations of the second aspect, AI models in the first group of AI models satisfy: when input information of the AI models in the first group of AI models is the same, output information is the same or a difference between output information falls within a preset range.

With reference to the second aspect, in some implementations of the second aspect, after the first communication apparatus sends the identifier of the first AI model, the method further includes: The first communication apparatus receives an identifier of a fourth AI model. The first communication apparatus determines, based on the identifier of the fourth AI model, whether an AI model that matches the fourth AI model is deployed on the first communication apparatus.

With reference to the second aspect, in some implementations of the second aspect, the fourth AI model belongs to a third group of AI models. That the first communication apparatus receives an identifier of a fourth AI model includes: The first communication apparatus receives the identifier of the fourth AI model and an identifier of at least one AI model other than the fourth AI model in the third group of AI models. That the first communication apparatus determines, based on the identifier of the fourth AI model, whether an AI model that matches the fourth AI model is deployed on the first communication apparatus includes: The first communication apparatus determines, based on the identifier of the fourth AI model and the identifier of the at least one AI model other than the fourth AI model in the third group of AI models, whether an AI model that matches the at least one AI model in the third group of AI models is deployed on the first communication apparatus.

With reference to the second aspect, in some implementations of the second aspect, AI models in the third group of AI models satisfy: when input information of the AI models in the third group of AI models is the same, output information is the same or a difference between output information falls within a preset range.

With reference to the second aspect, in some implementations of the second aspect, the second AI model is an AI model that matches at least one AI model in a second group of AI models, and the second group of AI models includes the first AI model. That the first communication apparatus sends an identifier of a first AI model includes: The first communication apparatus sends the identifier of the first AI model and an identifier of at least one AI model other than the first AI model in the second group of AI models.

With reference to the second aspect, in some implementations of the second aspect, AI models in the second group of AI models satisfy: when input information of the AI models in the second group of AI models is the same, output information is the same or a difference between output information falls within a preset range.

With reference to the second aspect, in some implementations of the second aspect, the method further includes: The first communication apparatus sends request information, where the request information is used to request the identifier of the first AI model. The first communication apparatus receives the identifier of the first AI model.

According to the foregoing technical solution, the first communication apparatus may request the identifier of the first AI model from another apparatus. In this way, the another apparatus may uniformly allocate identifiers of AI models, thereby avoiding repetition of the identifiers of the AI models when each communication apparatus configures an identifier of an AI model.

With reference to the second aspect, in some implementations of the second aspect, the request information includes at least one of the following: a type of the first communication apparatus to which the first AI model belongs, an identifier of the first communication apparatus to which the first AI model belongs, a vendor of the first communication apparatus to which the first AI model belongs, a function of the first AI model, a scenario to which the first AI model is applicable, a dataset of the first AI model, a communication parameter to which the first AI model is applicable, or a version of the first AI model.

With reference to the second aspect, in some implementations of the second aspect, the method further includes: The first communication apparatus sends registration information, where the registration information includes the identifier of the first AI model, and the registration information is used to register the identifier of the first AI model.

According to the foregoing technical solution, the first communication apparatus may register the identifier of the first AI model with another apparatus. In this way, the another apparatus may uniformly manage identifiers of AI models.

With reference to the second aspect, in some implementations of the second aspect, the identifier of the first AI model indicates at least one of the following: a type of the first communication apparatus to which the first AI model belongs, an identifier of the first communication apparatus to which the first AI model belongs, a vendor of the first communication apparatus to which the first AI model belongs, a function of the first AI model, a scenario to which the first AI model is applicable, a dataset of the first AI model, a communication parameter to which the first AI model is applicable, or a version of the first AI model.

With reference to the second aspect, in some implementations of the second aspect, the method further includes: The first communication apparatus sends a validity period of the first AI model.

For beneficial effects of the second aspect and the possible designs, refer to the related descriptions of the first aspect. Details are not described herein again.

According to a third aspect, a model matching method is provided. The method may be performed by a communication apparatus, or may be performed by a chip or a circuit used in the communication apparatus. The communication apparatus may be a second communication apparatus, or a third communication apparatus different from the second communication apparatus. This is not limited in this application.

The method may include: receiving request information from the first communication apparatus, where the request information is used to request an AI model that matches a first artificial intelligence AI model; and determining, in response to the request information, whether a second AI model is deployed on the second communication apparatus, where the second AI model is an AI model that matches at least one AI model in a second group of AI models, and the second group of AI models includes the first AI model.

According to the foregoing technical solution, AI models may be grouped. For example, the first communication apparatus sends the request information to the second communication apparatus, where the request information is used to request the AI model that matches the first AI model. Because the first AI model belongs to the second group of AI models, the second communication apparatus may determine whether the AI model that matches the at least one AI model in the second group of AI models is deployed on the second communication apparatus. If the AI model (for example, denoted as the second AI model) that matches the at least one AI model in the second group of AI models is deployed on the second communication apparatus, it may be considered that the second AI model matches all AI models in the second group of AI models.

With reference to the third aspect, in some implementations of the third aspect, when it is determined that the second AI model is deployed on the second communication apparatus, the method further includes: determining that each AI model in a first group of AI models matches each AI model in the first group of AI models, where the first group of AI models includes the second AI model.

With reference to the third aspect, in some implementations of the third aspect, AI models in the first group of AI models satisfy: when input information of the AI models in the first group of AI models is the same, output information is the same or a difference between output information falls within a preset range.

With reference to the third aspect, in some implementations of the third aspect, AI models in the second group of AI models satisfy: when input information of the AI models in the second group of AI models is the same, output information is the same or a difference between output information falls within a preset range.

According to a fourth aspect, a communication method is provided. The method may be performed by a communication apparatus, or may be performed by a chip or a circuit used in the communication apparatus. This is not limited in this application.

The method may include: sending request information, where the request information is used to request an identifier of an artificial intelligence AI model; and receiving the identifier of the AI model.

According to the foregoing technical solution, a first communication apparatus may request the identifier of the first AI model from another apparatus. In this way, the another apparatus may uniformly allocate identifiers of AI models, thereby avoiding repetition of the identifiers of the AI models when each communication apparatus configures an identifier of an AI model.

According to a fifth aspect, a communication method is provided. The method may be performed by a communication apparatus, or may be performed by a chip or a circuit used in the communication apparatus. This is not limited in this application.

The method may include: receiving request information, where the request information is used to request an identifier of an artificial intelligence AI model; determining the identifier of the AI model in response to the request information; and sending the identifier of the AI model.

With reference to the fourth aspect or the fifth aspect, in some implementations, the request information includes at least one of the following: a type of the communication apparatus to which the AI model belongs, an identifier of the communication apparatus to which the AI model belongs, a vendor of the communication apparatus to which the AI model belongs, a function of the AI model, a scenario to which the AI model is applicable, a dataset of the AI model, a communication parameter to which the AI model is applicable, or a version of the AI model.

For beneficial effects of the fifth aspect, refer to the related descriptions of the fourth aspect. Details are not described herein again.

According to a sixth aspect, a communication method is provided. The method may be performed by a communication apparatus, or may be performed by a chip or a circuit used in the communication apparatus. This is not limited in this application.

The method may include: obtaining an identifier of an artificial intelligence AI model; and sending registration information, where the registration information includes the identifier of the AI model, and the registration information is used to register the identifier of the AI model.

According to the foregoing technical solution, the first communication apparatus may register the identifier of the first AI model with another apparatus. In this way, the another apparatus may uniformly manage identifiers of AI models.

According to a seventh aspect, a communication method is provided. The method may be performed by a communication apparatus, or may be performed by a chip or a circuit used in the communication apparatus. This is not limited in this application.

The method may include: receiving registration information, where the registration information includes an identifier of an artificial intelligence AI model, and the registration information is used to register the identifier of the AI model; and storing the identifier of the AI model in response to the registration information.

For beneficial effects of the seventh aspect, refer to the related descriptions of the sixth aspect. Details are not described herein again.

For various designs that are not described in detail in the third aspect to the seventh aspect, refer to the descriptions of the first aspect or the second aspect.

According to a ninth aspect, a communication apparatus is provided. The apparatus is configured to perform the method according to any one of the first aspect to the seventh aspect. Specifically, the apparatus may include a unit and/or a module configured to perform the method according to any one of the foregoing implementations of any one of the first aspect to the seventh aspect, for example, a processing unit and/or a communication unit.

In an implementation, the apparatus is a communication device (for example, a terminal device or a network device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a ninth aspect, a communication apparatus is provided. The apparatus includes: a memory, configured to store a program; and at least one processor, configured to execute a computer program or instructions stored in the memory, to perform the method according to any one of the foregoing implementations of any one of the first aspect to the seventh aspect.

In an implementation, the apparatus is a communication device (for example, a terminal device or a network device).

In another implementation, the apparatus is a chip, a chip system, or a circuit used in a communication device.

According to a tenth aspect, this application provides a processor, configured to perform the methods according to the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eleventh aspect, a computer-readable storage medium is provided. The computer-readable medium stores program code to be executed by a device, and the program code includes the method according to any one of the foregoing implementations of any one of the first aspect to the seventh aspect.

According to a twelfth aspect, a computer program product including instructions is provided. When the computer program product runs on a computer, the computer is enabled to perform the method according to any one of the foregoing implementations of any one of the first aspect to the seventh aspect.

According to a thirteenth aspect, a chip is provided. The chip includes a processor and a communication interface. The processor reads, through the communication interface, instructions stored in a memory, to perform the method according to any one of the foregoing implementations of any one of the first aspect to the seventh aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any one of the foregoing implementations of any one of the first aspect to the seventh aspect.

According to a fourteenth aspect, a communication system is provided, and includes the foregoing first communication apparatus and second communication apparatus, or includes the foregoing first communication apparatus and third communication apparatus, or includes the foregoing first communication apparatus, second communication apparatus, and third communication apparatus.

## BRIEF DESCRIPTION OF DRAWINGS

FIG. 1 is a diagram of a wireless communication system 100 applicable to an embodiment of this application;
FIG. 2 is a diagram of a wireless communication system 200 applicable to an embodiment of this application;
FIG. 3 is a diagram of a neuron structure;
FIG. 4 is a diagram of a layer relationship of a neural network;
FIG. 5 is a diagram of a two-sided model;
FIG. 6 is a diagram of a communication method 600 according to an embodiment of this application;
FIG. 7 is a diagram of matching between two groups of AI models applicable to an embodiment of this application;
FIG. 8 is a diagram of an identifier of an AI model applicable to an embodiment of this application;
FIG. 9 is another diagram of an identifier of an AI model applicable to an embodiment of this application;
FIG. 10 is another diagram of an identifier of an AI model applicable to an embodiment of this application;
FIG. 11 is a diagram of registering an identifier of an AI model applicable to an embodiment of this application;
FIG. 12 is a diagram of notifying an identifier of an AI model applicable to an embodiment of this application;
FIG. 13 is a diagram of a communication method 1300 according to an embodiment of this application;
FIG. 14 is a diagram of a communication method 1400 according to another embodiment of this application;
FIG. 15 is a diagram of a communication method 1500 according to another embodiment of this application;
FIG. 16 is a diagram of a communication method 1600 according to another embodiment of this application;
FIG. 17 is a schematic block diagram of a communication apparatus 1700 according to an embodiment of this application;
FIG. 18 is a diagram of another communication apparatus 1800 according to an embodiment of this application; and
FIG. 19 is a diagram of a chip system 1900 according to an embodiment of this application.

**DESCRIPTION OF EMBODIMENTS**

The following describes technical solutions of embodiments in this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to future communication systems such as a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device in embodiments of this application includes various devices having a wireless communication function, and the terminal device may be configured to connect to a person, an object, a machine, and the like. The terminal device may be widely applied to various scenarios, for example, cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, smart grid, smart furniture, smart office, smart wearable, smart transportation, smart city drone, robot, remote sensing, passive sensing, positioning, navigation and tracking, and autonomous delivery. The terminal device may be a terminal in any one of the foregoing scenarios, for example, an MTC terminal or an IoT terminal. The terminal device may be user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multi-helicopter, a four-helicopter, or an airplane), a ship, a remote control device, a smart home device, or an industrial device, may be an apparatus built in the foregoing device (for example, a communication module, a modem, or a chip in the foregoing device), or may be another processing device connected to the wireless modem. For ease of description, an example in which the terminal device is a terminal or UE is used below for description.

It should be understood that, in some scenarios, the UE may further serve as a base station. For example, the UE may serve as a scheduling entity that provides a sidelink signal between UEs in a V2X scenario, a D2D scenario, a P2P scenario, or the like.

In this embodiment of this application, an apparatus configured to implement a function of the terminal device may be a terminal device; or may be an apparatus that can support the terminal device in implementing the function, for example, a chip system or a chip, where the apparatus may be installed in the terminal device. In this embodiment of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. A network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used for the network device are not limited in embodiments of this application.

The base station may be fixed or movable. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In embodiments of this application, an apparatus configured to implement a function of the network device may be a network device, or may be an apparatus that can support the network device in implementing the function, for example, a chip system or a chip. The apparatus may be installed in the network device. In embodiments of this application, the chip system may include a chip, or may include a chip and another discrete component.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application.

A communication system applicable to embodiments of this application is first briefly described below.

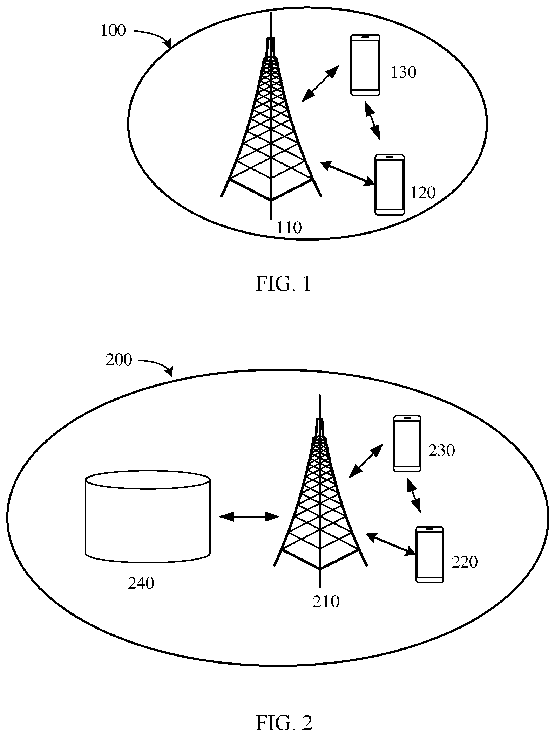

FIG. 1 is a diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 and a terminal device 130 shown in FIG. 1. A plurality of antennas may be configured for both the network device and the terminal device, and the network device and the terminal device may communicate with each other by using a multi-antenna technology. The terminal devices may also communicate with each other. For example, the terminal devices may directly communicate with each other. For another example, the terminal devices may communicate with each other via another communication device, for example, a network device or another terminal device.

When the network device communicates with the terminal device, the network device may manage one or more cells, and one cell may have an integer quantity of terminal devices. Optionally, the network device 110 and the terminal device 120 form a single-cell communication system. Without loss of generality, the cell is denoted as a cell #1. The network device 110 may be a network device in the cell #1, or the network device 110 may serve a terminal device (for example, the terminal device 120) in the cell #1.

It should be noted that the cell may be understood as an area within coverage of a radio signal of the network device.

FIG. 2 is a diagram of a wireless communication system 200 applicable to an embodiment of this application. As shown in FIG. 2, the wireless communication system 200 may include at least one network device, for example, a network device 210 shown in FIG. 2. The wireless communication system 200 may further include at least one terminal device, for example, a terminal device 220 and a terminal device 230 shown in FIG. 2. The wireless communication system 200 may further include at least one artificial intelligence (artificial intelligence, AI) node, for example, an AI node 240 shown in FIG. 2.

Optionally, the AI node is deployed on any one of the following: a network device, a terminal device, and a core network. FIG. 2 is an example for description. A case in which the AI node 240 is independently deployed is illustrated, for example, the AI node 240 is deployed at a location outside the network device and the terminal device. The AI node 240 may communicate with the network device 210, and the AI node 240 may further communicate with the terminal device 220 and the terminal device 230 via the network device 210. It may be understood that the AI node may also directly communicate with the terminal device. This is not limited.

Optionally, the AI node is configured to perform an AI-related operation. In an example, the AI-related operation may include, for example, a model failure test, a model performance test, a model training test, and data collection.

For example, the network device may forward, to the AI node, data that is related to an AI model and that is reported by the terminal device, and the AI node performs an AI-related operation. For another example, the network device or the terminal device may forward data related to an AI model to the AI node, and the AI node performs an AI-related operation. For another example, the AI node may send an output of an AI-related operation, for example, a trained neural network model, model evaluation, and a test result, to the network device and/or the terminal device. For example, the AI node may directly send an output of an AI-related operation to the network device and the terminal device. For another example, the AI node may send an output of an AI-related operation to the terminal device via the network device. For another example, the AI node may send an output of an AI-related operation to the network device via the terminal device.

It may be understood that a quantity of AI nodes is not limited in this application. For example, when there are a plurality of AI nodes, the plurality of AI nodes may be divided based on functions. For example, different AI nodes are responsible for different functions.

It may be further understood that the AI nodes may be independent devices, may be integrated into a same device to implement different functions, may be network elements in a hardware device, may be software functions running on dedicated hardware, or may be virtualization functions instantiated on a platform (for example, a cloud platform). Specific forms of the AI nodes are not limited in this application.

It may be further understood that in embodiments of this application, a communication apparatus (for example, a first communication apparatus, a second communication apparatus, or a third communication apparatus) may be a terminal device or a component (for example, a chip or a circuit) of the terminal device, may be a network device or a component (for example, a chip or a circuit) of the network device, or may be an AI node or a component (for example, a chip or a circuit) of the AI node. This is not limited.

It may be further understood that FIG. 1 and FIG. 2 are simplified diagrams of examples for ease of understanding. The wireless communication system may further include another network device, may include another terminal device, or may include another AI node, which is not shown in FIG. 1 and FIG. 2.

For ease of understanding embodiments of this application, the following first briefly describes terms in embodiments of this application.

1. Artificial intelligence: The artificial intelligence enables machines to learn and accumulate experience, so that the machines can resolve problems such as natural language understanding, image recognition, and chess playing that are resolved by humans through experience. The artificial intelligence may be understood as intelligence represented by a machine made by a person. Generally, the artificial intelligence is a technology that presents human intelligence by using a computer program. An objective of the artificial intelligence includes understanding intelligence by building symbolic reasoning or computer programs for reasoning.

2. Machine learning (machine learning): The machine learning is an implementation of artificial intelligence. The machine learning is a method that can give machine learning capabilities to enable machines to perform functions that cannot be implemented by direct programming. In practice, the machine learning is a method for training a model by using data, and then using the model for prediction. There are many machine learning methods, such as neural network (neural network, NN), decision tree, and support vector machine. A machine learning theory is mainly to design and analyze some algorithms that enable a computer to automatically learn. A machine learning algorithm is an algorithm that automatically analyzes data to obtain a rule and uses the rule to predict unknown data.

3. Neural network: The neural network is a specific embodiment of a machine learning method. The neural network is a mathematical model that imitates a behavior feature of an animal neural network and processes information. The idea of the neural network comes from a neuron structure of brain tissue. Each neuron may perform a weighted summation operation on input values of the neuron, and outputs, through an activation function, a result obtained through the weighted summation operation.

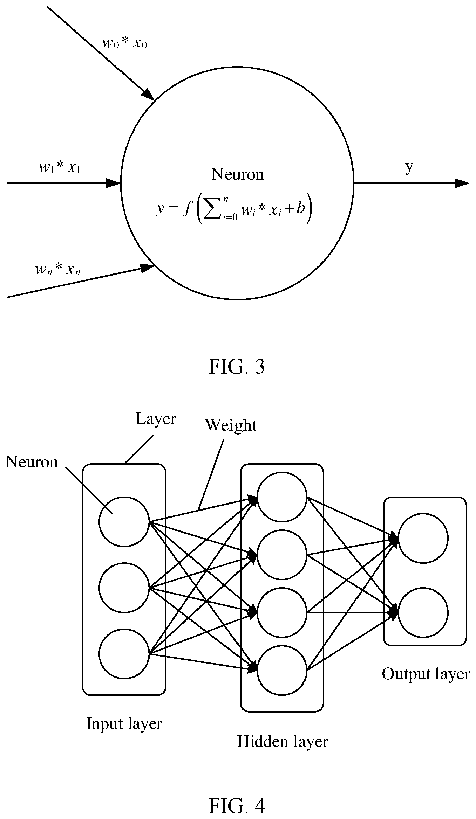

FIG. 3 is a diagram of a neuron structure. As shown in FIG. 3, it is assumed that inputs of a neuron are $x = [x_0, x_1, ..., x_n]$, weights corresponding to the inputs are respectively $w = [w, w_1, ..., w_n]$, and a bias of weighted summation is b. b may be an integer, may be a decimal, or may be various possible values such as a complex number. A form of an activation function may be diversified. In an example, assuming that an activation function of a neuron is $y = f(z) = \max(0, z)$, an output of the neuron is $y = f\left(\sum_{i=0}^{i=n} w_i * x_i + b\right) = \max\left(0, \sum_{i=0}^{i=n} w_i * x_i + b\right)$. In another example, assuming that an activation function of a neuron is y=f(z)=z, an output of the neuron is $y = f\left(\sum_{i=0}^{i=n} w_i * x_i + b\right) = \sum_{i=0}^{i=n} w_i * x_i + b$, as shown in FIG. 3. Activation functions of different neurons in a neural network may be the same or different.

The neural network usually includes a plurality of layers of structures, and each layer may include one or more logical determining units. Such the logical determining unit may be referred to as a neuron (neuron). A depth and/or a width of the neural network are/is increased, so that an expression capability of the neural network can be improved, and a more powerful information extraction and abstraction modeling capability can be provided for a complex system. The depth of the neural network may be understood as a quantity of layers included in the neural network, and a quantity of neurons included in each layer may be referred to as a width of the layer.

FIG. 4 is a diagram of a layer relationship of a neural network.

In a possible implementation, the neural network includes an input layer and an output layer. The input layer of the neural network performs neuron processing on a received input, and then transfers a result to the output layer. The output layer obtains an output result of the neural network.

In another possible implementation, the neural network includes an input layer, a hidden layer, and an output layer, as shown in FIG. 4. The input layer of the neural network performs neuron processing on a received input, and then transfers a result to the intermediate hidden layer. The hidden layer transfers a calculation result to the output layer or an adjacent hidden layer. Finally, the output layer obtains an output result of the neural network. One neural network may include one or more hidden layers that are sequentially connected. This is not limited.

A loss function may be defined in a training process of the neural network. The loss function is used to measure a difference between a predicted value and an actual value of a model. In the training process of the neural network, the loss function describes a difference between an output value and an ideal target value of the neural network. The training process of the neural network is a process of adjusting a neural network parameter, so that a value of the loss function is less than a threshold or meets a target requirement. The neural network parameter may include at least one of the following: a quantity of layers of the neural network, a width of the neural network, a weight of a neuron, or a parameter in an activation function of a neuron.

4. AI model: The AI model is an algorithm or a computer program that can implement an AI function. The AI model represents a mapping relationship between an input and an output of the model, or the AI model is a function model that maps an input of a specific dimension to an output of a specific dimension. A parameter of the function model may be obtained through machine learning training. For example, $f(x) = ax^2 + b$ is a quadratic function model, which may be considered as an AI model. a and b are parameters of the AI model, and a and b may be obtained through machine learning training.

It may be understood that the AI model may be implemented by using a hardware circuit, or may be implemented by using software, or may be implemented by combining software and hardware. This is not limited. A non-limitative example of the software includes program code, a program, a subprogram, instructions, an instruction set, code, a code segment, a software module, an application program, a software application program, or the like.

5. Dataset: The dataset is data used for model training, model verification, or model testing in machine learning. An amount and quality of the data affect an effect of machine learning.

6. Hyperparameter: The hyperparameter is a parameter like a quantity of layers of a neural network, a quantity of neurons, an activation function, and a loss function.

7. Model training: The model training is to select an appropriate loss function and use an optimization algorithm to train a model parameter, so as to minimize a loss function value.

8. Model application: The model application is to use a trained model to resolve a practical problem.

9. Two-sided model: The two-sided model is also referred to as a two-end (two-end) model, a collaboration model, a dual model, or the like. In this application, the two-sided model is a model formed by combining at least two AI models. The at least two AI models may be deployed on at least two nodes, that is, the at least two AI models are not deployed on a same node, and a plurality of AI models forming a two-sided model match each other. Two AI models are used as an example. For differentiation, the two AI models are respectively denoted as an AI model #1 and an AI model #2. The AI model #1 and the AI model #2 match each other, indicating that the AI model #1 can understand an output of the AI model #2, and can decode the output of the AI model #2 into an expected output.

In an example, an auto-encoder (auto-encoder, AE) in which an encoder and a decoder are deployed on different nodes is a two-sided model. The encoder and the decoder of the AE match each other, that is, the decoder can understand an output of the encoder, and can decode the output of the encoder into an expected output.

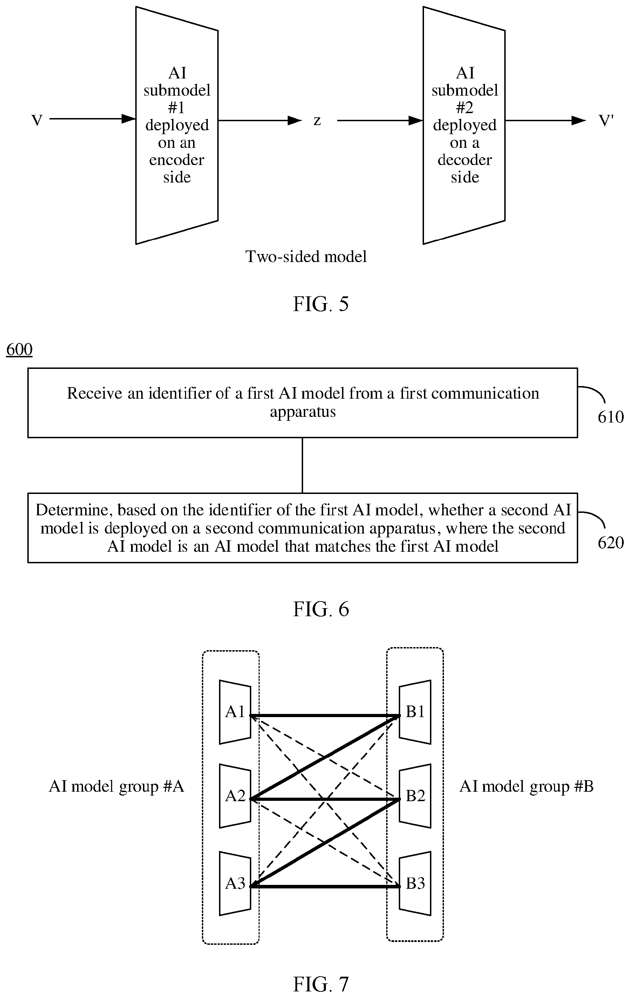

FIG. 5 is a diagram of a two-sided model. As shown in FIG. 5, an AI model #1 is deployed on an encoder, and an AI model #2 is deployed on a decoder. For the AI model #1 deployed on the encoder, an input of the AI model #1 is V, and an output of the AI model #1 is z. For the AI model #2 deployed on the decoder, an input of the AI model #2 is z, and an output of the AI model #2 is V'. V' is the same as V, or V' may accurately reflect V.

Generally, AI models of the two-sided model are trained at the same time, that is, the AI models match each other. The AI model #1 and the AI model #2 are used as an example. The AI model #1 and the AI model #2 may be trained by a same node and then respectively deployed on two nodes, or may be trained by two nodes in a distributed manner.

It should be noted that in this application, "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners, for example, but not limited to, the following manners: The to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated in an arrangement sequence of all information that is pre-agreed on (for example, stipulated in a protocol), to reduce indication overheads to some extent. In addition, the to-be-indicated information may be sent as a whole, or may be divided into a plurality of pieces of sub-information for sending separately; and sending periodicities and/or sending occasions of these pieces of sub-information may be the same or different.

The following describes, in detail with reference to the accompanying drawings, a communication method provided in embodiments of this application. Embodiments provided in this application may be applied to the communication system shown in FIG. 1 or FIG. 2. This is not limited. In the following embodiments, a communication apparatus (for example, a first communication apparatus, a second communication apparatus, or a third communication apparatus) may be a terminal device or a component (for example, a chip or a circuit) of the terminal device, or may be a network device or a component (for example, a chip or a circuit) of the network device, or may be an AI node or a component (for example, a chip or a circuit) of the AI node.

FIG. 6 is a diagram of a communication method 600 according to an embodiment of this application. The method 600 shown in FIG. 6 may include the following steps.

610. Receive an identifier of a first AI model from a first communication apparatus.

Correspondingly, the first communication apparatus sends the identifier of the first AI model.

The first AI model may be an AI model deployed on the first communication apparatus, that is, the first AI model is an AI model in the first communication apparatus. There may be at least one first AI model. In other words, the first communication apparatus may send an identifier of one AI model, or may send identifiers of at least two AI models. This is not limited.

The identifier of the AI model is described in detail below.

620. Determine, based on the identifier of the first AI model, whether a second AI model is deployed on a second communication apparatus, where the second AI model is an AI model that matches the first AI model.

In this embodiment of this application, the communication apparatuses may exchange the identifier of the AI model to perform AI model matching. For example, the first communication apparatus sends the identifier of the first AI model to the second communication apparatus, and the second communication apparatus may identify the first AI model based on the identifier of the first AI model, to determine whether the AI model that matches the first AI model is deployed on the second communication apparatus. In this way, AI model matching can be implemented. In addition, the identifier of the AI model instead of the AI model can be transmitted, thereby protecting privacy of the AI model and reducing signaling overheads caused by transmission of the AI model.

Step 610 and step 620 may include at least the following implementations.

In a first possible implementation, in step 610, the second communication apparatus receives the identifier of the first AI model from the first communication apparatus; and in step 620, the second communication apparatus determines, based on the identifier of the first AI model, whether the second AI model is deployed on the second communication apparatus.

For example, the first communication apparatus directly sends the identifier of the first AI model to the second communication apparatus, so that the second communication apparatus determines, based on the identifier of the first AI model, whether the second AI model is deployed on the second communication apparatus.

For another example, the first communication apparatus sends the identifier of the first AI model to another communication apparatus, and the another communication apparatus forwards the identifier of the first AI model to the second communication apparatus, so that the second communication apparatus determines, based on the identifier of the first AI model, whether the second AI model is deployed on the second communication apparatus.

In a second possible implementation, in step 610, a third communication apparatus receives the identifier of the first AI model from the first communication apparatus; and in step 620, the third communication apparatus determines, based on the identifier of the first AI model, whether the second AI model is deployed on the second communication apparatus.

For example, the first communication apparatus directly sends the identifier of the first AI model to the third communication apparatus, so that the third communication apparatus determines, based on the identifier of the first AI model, whether the second AI model is deployed on the second communication apparatus.

For another example, the first communication apparatus sends the identifier of the first AI model to another communication apparatus (for example, the second communication apparatus), and the another communication apparatus forwards the identifier of the first AI model to the third communication apparatus, so that the third communication apparatus determines, based on the identifier of the first AI model, whether the second AI model is deployed on the second communication apparatus.

For another example, the first communication apparatus directly sends the identifier of the first AI model to the third communication apparatus, the second communication apparatus directly sends an identifier of at least one AI model to the third communication apparatus, and the third communication apparatus determines whether the at least one AI model includes an AI model that matches the first AI model, that is, determines whether the at least one AI model includes the second AI model, to determine whether the second AI model is deployed on the second communication apparatus.

Optionally, the first communication apparatus determines, based on a response, whether the second AI model is deployed on the second communication apparatus.

In a possible implementation, the first communication apparatus determines, based on received feedback information, whether the second AI model is deployed on the second communication apparatus. Based on this implementation, the method 600 further includes: sending feedback information to the first communication apparatus, where the feedback information is used to feed back whether the second AI model is deployed on the second communication apparatus.

Example 1: When it is determined that the second AI model is not deployed on the second communication apparatus, feedback information is sent to the first communication apparatus, where the feedback information is used to feed back that the second AI model is not deployed on the second communication apparatus. For differentiation, the feedback information used to feed back that the second AI model is not deployed on the second communication apparatus is denoted as first feedback information.

For example, in the first possible implementation, after determining, based on the identifier of the first AI model, that the second AI model is not deployed on the second communication apparatus, the second communication apparatus sends the first feedback information to the first communication apparatus. For example, the second communication apparatus directly sends the first feedback information to the first communication apparatus. For another example, the second communication apparatus sends the first feedback information to another communication apparatus, and the another communication apparatus forwards the first feedback information to the first communication apparatus.

For another example, in the second possible implementation, after determining, based on the identifier of the first AI model, that the second AI model is not deployed on the second communication apparatus, the third communication apparatus sends the first feedback information to the first communication apparatus. For example, the third communication apparatus directly sends the first feedback information to the first communication apparatus. For another example, the third communication apparatus sends the first feedback information to another communication apparatus (for example, the second communication apparatus), and the another communication apparatus forwards the first feedback information to the first communication apparatus.

Example 2: When it is determined that the second AI model is deployed on the second communication apparatus, feedback information is sent to the first communication apparatus, where the feedback information is used to feed back that the second AI model is deployed on the second communication apparatus. For differentiation, the feedback information used to feed back that the second AI model is deployed on the second communication apparatus is denoted as second feedback information.

For example, in the first possible implementation, after determining, based on the identifier of the first AI model, that the second AI model is deployed on the second communication apparatus, the second communication apparatus sends the second feedback information to the first communication apparatus. For example, the second communication apparatus directly sends the second feedback information to the first communication apparatus. For another example, the second communication apparatus sends the second feedback information to another communication apparatus, and the another communication apparatus forwards the second feedback information to the first communication apparatus.

For another example, in the second possible implementation, after determining, based on the identifier of the first AI model, that the second AI model is deployed on the second communication apparatus, the third communication apparatus sends the second feedback information to the first communication apparatus. For example, the third communication apparatus directly sends the second feedback information to the first communication apparatus. For another example, the third communication apparatus sends the second feedback information to another communication apparatus (for example, the second communication apparatus), and the another communication apparatus forwards the second feedback information to the first communication apparatus.

In another possible implementation, the first communication apparatus determines, based on that no feedback information is received, whether the second AI model is deployed on the second communication apparatus.

Descriptions are separately provided below in two cases.

In a first possible case, the second AI model is not deployed on the second communication apparatus.

For example, in the first possible implementation, after the second communication apparatus determines, based on the identifier of the first AI model, that the second AI model is not deployed on the second communication apparatus, the second communication apparatus does not send feedback information. In an example, the feedback information may be an acknowledgment. Based on this implementation, if the first communication apparatus does not receive an acknowledgment from the second communication apparatus within a period of time (denoted as a time period #1 for differentiation), the first communication apparatus considers by default that the second AI model that matches the first AI model is not deployed on the second communication apparatus. In an example, a start moment of the time period #1 may be a moment at which the first communication apparatus sends the identifier of the first AI model, and duration of the time period #1 may be predefined, or may be estimated based on a historical situation. This is not limited. In an example, the time period #1 may be implemented by using a timer.

In a second possible case, the second AI model is deployed on the second communication apparatus.

For example, in the first possible implementation, after the second communication apparatus determines, based on the identifier of the first AI model, that the second AI model is deployed on the second communication apparatus, the second communication apparatus does not send feedback information. In an example, the feedback information may be a negative acknowledgment. Based on this implementation, if the first communication apparatus does not receive a negative acknowledgment from the second communication apparatus within a period of time (denoted as a time period #2 for differentiation), the first communication apparatus considers by default that the second AI model that matches the first AI model is deployed on the second communication apparatus. In an example, a start moment of the time period #2 may be a moment at which the first communication apparatus sends the identifier of the first AI model, and duration of the time period #2 may be predefined, or may be estimated based on a historical situation. This is not limited. In an example, the time period #2 may be implemented by using a timer.

Optionally, in step 620, the determining, based on the identifier of the first AI model, whether a second AI model is deployed on a second communication apparatus includes: determining, based on the identifier of the first AI model and an association relationship, whether the second AI model is deployed on the second communication apparatus.

The association relationship represents a relationship between identifiers of AI models that match each other. Specifically, if two AI models match each other, identifiers of the two AI models are also associated with each other, that is, the identifiers of the two AI models have an association.

For example, if an AI model #1 and an AI model #2 are matched AI models, for example, the AI model #1 and the AI model #2 form a two-sided model, the association relationship includes a relationship between an identifier of the AI model #1 and an identifier of the AI model #2. In other words, after the identifier of the AI model #1 is determined, the identifier of the AI model #2 that matches the AI model #1 is also determined. A communication apparatus on which the AI model #1 is deployed and/or a communication apparatus on which the AI model #2 is deployed may maintain an association relationship between the identifier of the AI model #1 and the identifier of the AI model #2.

In an example, the association relationship may exist in a form of a table, a function, or a character string, for example, may be stored or transmitted. Table 1 is an example of presenting the association relationship in a form of a table.

Table 1 is used as an example. An AI model #1 and an AI model #2 are AI models that match each other, an AI model #3 and an AI model #4 are AI models that match each other, and an AI model #5 and each of an AI model #6 and an AI model #7 are AI models that match each other. Therefore, the association relationship includes a relationship between an identifier of the AI model #1 and an identifier of the AI model #2, a relationship between an identifier of the AI model #3 and an identifier of the AI model #4, a relationship between an identifier of the AI model #5 and an identifier of the AI model #6, and a relationship between the identifier of the AI model #5 and an identifier of the AI model #7.

Table 1

| Identifiers of AI models that match each other | |
|---|---|
| Identifier of an AI model #1 | Identifier of an AI model #2 |
| Identifier of an AI model #3 | Identifier of an AI model #4 |
| Identifier of an AI model #5 | Identifier of an AI model #6 and identifier of an AI model #7 |

In a possible implementation, it may be first determined, based on the association relationship, that the AI model that matches the first AI model is the second AI model, and then whether the second AI model is deployed on the second communication apparatus is determined. For example, if the first AI model is the AI model #1, it is determined, based on the identifier of the AI model #1 and the association relationship shown in Table 1, that the AI model that matches the AI model #1 is the AI model #2, and then whether the AI model #2 is deployed on the second communication apparatus is determined.

In another possible implementation, which AI models are deployed on the second communication apparatus may be first determined, and then whether the AI models deployed on the second communication apparatus include an AI model that matches the first AI model is determined based on the association relationship. For example, if the AI models deployed on the second communication apparatus include the AI model #2 and the AI model #4, and the first AI model is the AI model #1, it may be learned, based on the association relationship shown in Table 1, that the AI model #1 matches the AI model #2. Therefore, it may be determined that the AI model that matches the AI model #1 is deployed on the second communication apparatus, that is, the AI model #2.

It may be understood that, Table 1 is an example for description, and no limitations are imposed herein. For example, one AI model can match more AI models. For another example, the identifier of the AI model in Table 1 may be replaced with other information that can identify the AI model. For another example, the association relationship may exist in a form of a text. This is not limited.

Optionally, in this embodiment of this application, the AI models may be grouped. If at least one pair of AI models that match each other (for example, AI models that match each other through training) exists between two groups of AI models, the two groups of AI models match each other. An AI model group #A and an AI model group #B are as an example. If at least one pair of AI models that match each other (for example, AI models that match each other through training) exists between the two groups of AI models, any AI model in the AI model group #A may match any AI model in the AI model group #B.

FIG. 7 is a diagram of matching two groups of AI models applicable to an embodiment of this application.

As shown in FIG. 7, AI models in an AI model group #A include an AI model A1, an AI model A2, and an AI model A3, and AI models in an AI model group #B include an AI model B1, an AI model B2, and an AI model B3. It may be considered that any AI model in the AI model group #A may match any AI model in the AI model group #B.

Specifically, one AI model may match a plurality of AI models, as shown in FIG. 7. It is assumed that the AI model A1 and the AI model B1 are AI models that match through training, the AI model A2 and the AI model B1 and the AI model A2 and the AI model B2 are AI models that match through training, and the AI model A3 and the AI model B2 and the AI model A3 and the AI model B3 are AI models that match through training. It can be learned that both the AI model A1 and the AI model A2 match the AI model B1. Therefore, it may be considered that the AI model A1 and the AI model A2 have similar functions. In addition, because the AI model A2 matches the AI model B2, it may be considered that the AI model A1 also matches the AI model B2. Therefore, it may be considered that any AI model in the AI model group #A may match any AI model in the AI model group #B.

For example, the AI model group may be determined during AI model registration. This is not limited.

A specific manner of grouping AI models is not limited.

In a possible implementation, AI models with similar functions may be considered as a group. Similar functions may be understood as that when inputs of two AI models are the same, outputs of the two AI models are also the same, or an output difference falls within a preset range (for example, is less than a threshold).

Optionally, the second AI model is an AI model that matches at least one AI model in the second group of AI models, and the second group of AI models includes the first AI model. In step 610, the receiving an identifier of a first AI model from a first communication apparatus includes: receiving an identifier of the at least one AI model in the second group of AI models from the first communication apparatus. In step 620, the determining, based on the identifier of the first AI model, whether a second AI model is deployed on a second communication apparatus includes: determining, based on the identifier of the at least one AI model in the second group of AI models, whether the second AI model is deployed on the second communication apparatus. In an example, AI models in the second group of AI models satisfy: when input information of the AI models in the second group of AI models is the same, output information is the same or a difference between output information falls within a preset range.

In a first possible implementation, in step 610, identifiers of all AI models in the second group of AI models are received from the first communication apparatus. Correspondingly, in step 620, whether the second AI model is deployed on the second communication apparatus is determined based on the identifiers of all the AI models in the second group of AI models. If an AI model that matches at least one AI model in the second group of AI models is deployed on the second communication apparatus, it is determined that an AI model that matches each AI model in the second group of AI models is deployed on the second communication apparatus.

Descriptions are provided below by using examples. It is assumed that the second group of AI models includes the first AI model and a third AI model. Based on the first possible implementation, in step 610, the identifier of the first AI model and an identifier of the third AI model are received from the first communication apparatus. Correspondingly, in step 620, whether an AI model that matches the first AI model or the third AI model is deployed on the second communication apparatus is determined based on the identifier of the first AI model and the identifier of the third AI model. Provided that the AI model that matches the first AI model or the third AI model is deployed on the second communication apparatus, it is considered that the AI model matches both the first AI model and the third AI model.

It may be understood that the identifiers of the AI models may be sent at the same time or may be sent in batches. This is not limited. In addition, the identifiers of the AI models may be carried in same signaling, or may be carried in different signaling. This is not limited.

In a second possible implementation, in step 610, identifiers of some AI models in the second group of AI models are received from the first communication apparatus. Correspondingly, in step 620, whether the second AI model is deployed on the second communication apparatus is determined based on the identifiers of the some AI models in the second group of AI models. If an AI model that matches at least one AI model in the some AI models is deployed on the second communication apparatus, it is determined that an AI model that matches each AI model in the second group of AI models is deployed on the second communication apparatus.

Descriptions are provided below by using examples. It is assumed that the second group of AI models includes the first AI model and a third AI model. Based on the second possible implementation, in step 610, the identifier of the first AI model or an identifier of the third AI model is received from the first communication apparatus. Correspondingly, in step 620, whether an AI model that matches the first AI model or the third AI model is deployed on the second communication apparatus is determined based on the identifier of the first AI model or the identifier of the third AI model. Provided that the AI model that matches the first AI model or the third AI model is deployed on the second communication apparatus, it is considered that the AI model matches both the first AI model and the third AI model.

It may be understood that the identifiers of the AI models may be sent at the same time or may be sent in batches. This is not limited. In addition, the identifiers of the AI models may be carried in same signaling, or may be carried in different signaling. This is not limited.

In a third possible implementation, in step 610, a group identifier of the second group of AI models is received from the first communication apparatus. Correspondingly, in step 620, whether the second AI model is deployed on the second communication apparatus is determined based on the group identifier of the second group of AI models.

The group identifier is an identifier of an AI model group. In an example, an identifier of each AI model in the AI model group may be obtained based on the group identifier.

In an example, the group identifier and the identifier of each AI model in the AI model group corresponding to the group identifier may exist in a form of a table, a function, or a character string, for example, may be stored or transmitted. Table 2 shows an example of storage in a form of a table.

Table 2

| Group identifier of an AI model group | Identifier of each AI model in the AI model group |
|---|---|
| AI model group #A | AI model A1, AI model A2, and AI model A3 |
| AI model group #B | AI model B1, AI model B2, and AI model B3 |

It can be learned from Table 2 that, if the group identifier of the AI model group is obtained, the identifier of each AI model in the AI model group may be obtained. For example, if the second group of AI models is the AI model group #A, the group identifier of the AI model group #A is received from the first communication apparatus in step 610. The identifier of the AI model A1, the identifier of the AI model A2, and the identifier of the AI model A3 may be obtained based on the AI model group #A and Table 2, and then whether an AI model that matches at least one of the AI model A1, the AI model A2, and the AI model A3 is deployed on the second communication apparatus is determined based on the identifier of the AI model A1, the identifier of the AI model A2, and the identifier of the AI model A3. Provided that the AI model that matches at least one of the AI model A1, the AI model A2, and the AI model A3 is deployed on the second communication apparatus, it is considered that the AI model matches all the AI models in the second group of AI models.

It may be understood that, Table 2 is an example for description, and no limitations are imposed herein. For example, one AI model group may include more AI models. For another example, the association relationship may also be an association relationship between group identifiers of AI model groups. For another example, the group identifier and an identifier of each AI model in the AI model group corresponding to the group identifier may exist in a form of a text. This is not limited.

Optionally, priorities of AI models in the AI model group are different, and an AI model with a higher priority is preferentially matched. For example, the second group of AI models includes the first AI model and a third AI model, and a priority of the first AI model is higher than a priority of the third AI model. When it is determined, based on the identifier of the first AI model and an identifier of the third AI model, whether the second AI model is deployed on the second communication apparatus, whether an AI model that matches the first AI model is deployed on the second communication apparatus may be first determined based on the identifier of the first AI model, and when it is determined, based on the identifier of the first AI model, that the AI model that matches the first AI model is not deployed on the second communication apparatus, whether an AI model that matches the third AI model is deployed on the second communication apparatus is determined based on the identifier of the third AI model.

In an example, the priority of each AI model may be obtained in any one of the following manners.

In a first possible implementation, the priority of each AI model is explicitly indicated.

The second group of AI models is used as an example. The first communication apparatus sends a priority of each AI model in the second group of AI models. For example, the second communication apparatus determines whether the second AI model is deployed on the second communication apparatus. The first communication apparatus sends priorities of AI models in the second group of AI models to the second communication apparatus, and the second communication apparatus sequentially determines, based on the priorities of the AI models and in descending order of the priorities, whether there is an AI model that matches each AI model in the second group of AI models.

The priority and the identifier of the AI model or the group identifier may be carried in same signaling, or may be carried in different signaling. This is not limited.

In a second possible implementation, the priority of each AI model is implicitly indicated.

The second group of AI models is used as an example. In an example, when sending identifiers of AI models in the second group of AI models, the first communication apparatus may sequentially sort the identifiers based on priorities of the AI models, for example, sequentially sort the identifiers in descending or ascending order of the priorities. For example, the second communication apparatus determines whether the second AI model is deployed on the second communication apparatus. For example, the first communication apparatus sequentially sends identifiers of AI models in the second group of AI models to the second communication apparatus in descending order of priorities of the AI models. The second communication apparatus sequentially determines, starting from a received identifier of a 1st AI model, whether there is an AI model that matches each AI model in the second group of AI models.

It may be understood that the foregoing sequential sorting based on the priorities of the AI models may be, for example, sequential sorting based on time at which identifiers of different AI models are sent, or sequential sorting based on different fields in same signaling. This is not limited.

It may be understood that the foregoing two implementations are described by using a priority of each AI model in the AI model group as an example. This is not limited. For example, when the first communication apparatus sends the identifiers of at least two AI models (the at least two AI models may not be AI models in a same AI group), the at least two AI models may also have different priorities. For a priority indication manner, refer to the foregoing indication manner of the priority of each AI model in the AI model group. Details are not described herein again.

Optionally, when it is determined that the second AI model is deployed on the second communication apparatus, the method 600 further includes: sending an identifier of the second AI model to the first communication apparatus, where the identifier of the second AI model is used by the first communication apparatus to determine whether the first AI model matches the second AI model.

Based on this, when determining that the second AI model is deployed on the second communication apparatus, the second communication apparatus or a third communication apparatus sends an identifier of the second AI model to the first communication apparatus. In this way, both the first communication apparatus and the second communication apparatus or the third communication apparatus perform AI model matching confirmation, so that a probability that an AI model matching error occurs can be reduced. For example, the second communication apparatus determines that the second AI model is deployed on the second communication apparatus. If the second communication apparatus and the first communication apparatus have different understandings of the identifiers of the AI models, or the identifiers of the AI models conflict, an AI model matching error may be caused. Both the second communication apparatus and the first communication apparatus perform AI model matching confirmation, so that a probability that an AI model matching error occurs can be reduced. For example, if the first communication apparatus and the third communication apparatus respectively configure identifiers of AI models, a case in which the identifiers of the AI models that are configured by the first communication apparatus and the third communication apparatus are the same may occur. If an AI model deployed on the third communication apparatus matches an AI model deployed on the second communication apparatus, and an AI model deployed on the first communication apparatus does not match the AI model deployed on the second communication apparatus, after receiving the identifier of the first AI model from the first communication apparatus, the second communication apparatus may consider that the identifier of the first AI model is an identifier of the AI model deployed on the third communication apparatus. Consequently, a matching error occurs.

Further, optionally, the first communication apparatus may feed back a matching result, that is, the second communication apparatus determines the matching result of the first communication apparatus based on a response. This implementation is similar to the foregoing implementation in which the first communication apparatus determines, based on the response, whether the second AI model is deployed on the second communication apparatus. Details are not described herein again.

Further, optionally, if the second AI model belongs to a first group of AI models, the sending an identifier of the second AI model to the first communication apparatus includes: sending an identifier of at least one AI model in the first group of AI models to the first communication apparatus. In an example, AI models in the first group of AI models satisfy: when input information of the AI models in the first group of AI models is the same, output information is the same or a difference between output information falls within a preset range.

In a first possible implementation, identifiers of all AI models in the first group of AI models are sent to the first communication apparatus. If an AI model that matches at least one AI model in the first group of AI models is deployed on the first communication apparatus, it is determined that each AI model in the first group of AI models matches the first AI model, that is, the second AI model matches the first AI model.

In a second possible implementation, identifiers of some AI models in the first group of AI models are sent to the first communication apparatus. If an AI model that matches at least one AI model in the some AI models is deployed on the first communication apparatus, it is determined that each AI model in the first group of AI models matches the first AI model, that is, the second AI model matches the first AI model.

In a third possible implementation, a group identifier of the first group of AI models is sent to the first communication apparatus. If an AI model that matches at least one AI model in the first group of AI models is deployed on the first communication apparatus, it is determined that each AI model in the first group of AI models matches the first AI model, that is, the second AI model matches the first AI model.

For the foregoing three implementations, refer to the foregoing related descriptions of the second group of AI models. Details are not described herein again.

The following describes a solution related to an identifier of an AI model.

The identifier of the AI model represents an identifier that can identify some attributes of the AI model. For example, in this embodiment of this application, there may be two types of identifiers of the AI model: a global identifier and a local identifier. The global identifier represents an identifier that can identify each attribute of the AI model, that is, each attribute of the AI model may be obtained based on the global identifier. The local identifier represents an identifier that can identify a specific attribute of the AI model, that is, one or some attributes of the AI model may be obtained based on the local identifier. In this embodiment of this application, when the identifier of the AI model is transmitted between the communication apparatuses, the global identifier of the AI model may be transmitted, or the partial identifier of the AI model may be transmitted. This is not limited.

The identifier of the first AI model is used as an example. Optionally, the identifier of the first AI model indicates at least one of the following: a type of the first communication apparatus to which the first AI model belongs, an identifier of the first communication apparatus to which the first AI model belongs, a vendor of the first communication apparatus to which the first AI model belongs, a function of the first AI model, a scenario to which the first AI model is applicable, a dataset of the first AI model, a communication parameter to which the first AI model is applicable, or a version of the first AI model.

1. The foregoing identifiers are first briefly described.

(1) Type identifier of the first communication apparatus to which the first AI model belongs (or briefly referred to as a type identifier): indicates a type of a communication apparatus that trains and/or uses the first AI model. For example, the type of the communication apparatus that trains and/or uses the first AI model is terminal device. For another example, the type of the communication apparatus that trains and/or uses the first AI model is network device.

In a possible implementation, the type identifier is implemented by using at least one bit. For example, it is assumed that 1 bit indicates the type identifier. If the bit is set to "1 ", it indicates that the communication apparatus that trains and/or uses the first AI model is a terminal device. If the bit is set to "0", it indicates that the communication apparatus that trains and/or uses the first AI model is a network device. It should be understood that the foregoing descriptions are merely examples for description, and no limitations are imposed.

(2) Identifier of the first communication apparatus to which the first AI model belongs (or briefly referred to as an apparatus identifier): indicates a communication apparatus that trains and/or uses the first AI model.

In a possible implementation, the apparatus identifier may be implemented by using any one of the following: a permanent equipment identifier (permanent equipment identifier, PEI), a subscription permanent identifier (subscription permanent identifier, SUPI), a global unique temporary identifier (global unique temporary identifier), a cell radio network temporary identifier (cell radio network temporary identifier, C-RNTI), or a physical layer cell identity (physical layer cell identity).

(3) Vendor identifier of the first communication apparatus to which the first AI model belongs (or briefly referred to as a vendor identifier): indicates a vendor that trains and/or uses the first AI model.

For example, if the first communication apparatus is a terminal device, the vendor identifier may be a vendor identifier of the terminal device. For another example, if the first communication apparatus is a network device, the vendor identifier may be a vendor identifier of the network device. For another example, if the first communication apparatus is a chip, the vendor identifier may be a vendor identifier of the chip. Alternatively, the first communication apparatus belongs to a first communication system, and the vendor identifier may be an operator identifier of the system.

(4) Function identifier of the first AI model (or briefly referred to as a function identifier): indicates a function of the first AI model. The function of the first AI model may be understood as, for example, a problem that can be resolved by the first AI model, or a task that can be executed by the first AI model.

In an example, the function of the first AI model includes at least one of the following: channel state information (channel state information, CSI) feedback, CSI prediction, positioning, or beam management.

In a possible implementation, the function identifier is implemented by using at least one bit. For example, it is assumed that 2 bits indicate the function identifier. If the bit is set to "01", it indicates that the function of the first AI model is CSI feedback. If the bit is set to "10", it indicates that the function of the first AI model is CSI prediction. If the bit is set to "00", it indicates that the function of the first AI model is positioning. If the bit is set to "11", it indicates that the function of the first AI model is beam management. It should be understood that the foregoing descriptions are merely examples for description, and no limitations are imposed.

(5) Scenario identifier to which the first AI model is applicable (or briefly referred to as a scenario identifier): indicates a scenario to which the first AI model is applicable, for example, an indoor scenario, an outdoor scenario, an urban scenario, or a suburban scenario.

In a possible implementation, the scenario identifier is implemented by using at least one bit. For example, it is assumed that 2 bits indicate the scenario identifier. If the bit is set to "00", it indicates that the scenario to which the first AI model is applicable is an indoor scenario. If the bit is set to "01", it indicates that the scenario to which the first AI model is applicable is an outdoor scenario. If the bit is set to "10", it indicates that the scenario to which the first AI model is applicable is an urban scenario. If the bit is set to "11", it indicates that the scenario to which the first AI model is applicable is a suburban scenario. It should be understood that the foregoing descriptions are merely examples for description, and no limitations are imposed.

(6) Dataset identifier of the first AI model (or briefly referred to as a dataset identifier): indicates a dataset based on which the first AI model is obtained through training. For example, an apparatus has a plurality of datasets, the apparatus may obtain a plurality of AI models through training based on the plurality of datasets, and the dataset identifier may indicate a dataset used to obtain an AI model. In an example, different datasets may be identified by using different identifiers.

In a possible implementation, the dataset identifier is implemented by using at least one bit. For example, it is assumed that 1 bit indicates the dataset identifier. If the bit is set to "0", it indicates that the first AI model is obtained through training based on a first dataset. If the bit is set to "1", it indicates that the first AI model is obtained through training based on a second dataset. It should be understood that the foregoing descriptions are merely examples for description, and no limitations are imposed.

It may be understood that the dataset identifier may have a correspondence with one or two of the scenario identifier or the communication parameter identifier to which the first AI model is applicable. In this way, the dataset identifier may replace one or two of the scenario identifier or the communication parameter identifier to which the first AI model is applicable, or may coexist with one or two of the scenario identifier or the communication parameter identifier to which the first AI model is applicable. For example, there is a correspondence between the dataset identifier and the scenario identifier. If there is a correspondence between the dataset identifier and the scenario identifier, the scenario identifier corresponding to the dataset identifier may be obtained based on the dataset identifier and the correspondence between the dataset identifier and the scenario identifier; or the dataset identifier corresponding to the scenario identifier may be obtained based on the scenario identifier and the correspondence between the dataset identifier and the scenario identifier. The correspondence between the dataset identifier and the scenario identifier may be predefined in a protocol, pre-stored, or preconfigured.

(7) Communication parameter identifier to which the first AI model is applicable (or briefly referred to as a configuration identifier or a communication parameter identifier): indicates a radio parameter configuration to which the first AI model is applicable. The radio parameter configuration may include, for example, at least one of the following configurations: an antenna configuration, a bandwidth, a rank, CSI feedback overheads, a reference signal configuration, a carrier frequency, or a subcarrier spacing.

(8) Version identifier of the first AI model (or briefly referred to as a version identifier): indicates a version of the first AI model. Versions of AI models may be different versions of a same AI model, or may be different versions of different AI models. This is not limited.

In a possible manner, the version identifier may indicate one or two of complexity or performance of the AI model.

For example, the version identifier may include a complexity identifier, a performance identifier, or a complexity identifier and a performance identifier.

For example, functions or scenarios of at least two AI models are the same, but complexity of the at least two AI models is different. In other words, the at least two AI models are used to resolve a problem of different complexity. Therefore, the at least two AI models may be distinguished by using version identifiers. In this case, the version identifier may also be referred to as a complexity identifier. An AI model #1 and an AI model #2 are used as an example. The AI model #1 and the AI model #2 have a same function or scenario, and the AI model #1 and the AI model #2 have different complexity. For example, the AI model #1 has a small quantity of layers. For example, the AI model #1 includes an input layer and an output layer, and the AI model #1 is used to resolve a problem of low complexity. The AI model #2 has a large quantity of layers. For example, the AI model #2 includes an input layer, a hidden layer, and an output layer, and the AI model #2 is used to resolve a problem of high complexity.

For another example, functions or scenarios of at least two AI models are the same, but performance of the at least two AI models is different. In other words, when inputs of the at least two AI models are the same, differences between output values and ideal target values are different. Therefore, the at least two AI models may be distinguished by using version identifiers. In this case, the version identifier may also be referred to as a performance identifier. An AI model #1 and an AI model #2 are used as an example. The AI model #1 and the AI model #2 have a same function or scenario, and the AI model #1 and the AI model #2 have different performance. For example, the AI model #1 has a small quantity of layers. For example, the AI model #1 includes an input layer, one hidden layer, and an output layer, and the AI model #1 has low performance, that is, a difference between an output value and an ideal target value is large. The AI model #2 has a large quantity of layers. For example, the AI model #2 includes an input layer, at least two hidden layers, and an output layer, and the AI model #2 has high performance, that is, a difference between an output value and an ideal target value is small.

For another example, the version identifier may have a correspondence with the complexity identifier and the performance identifier. That is, at least one of complexity or performance of the corresponding AI model varies with the version identifier. The correspondence may be predefined in a protocol, pre-stored, or preconfigured.

The foregoing example is an example for description, and no limitations are imposed herein.

In a possible implementation, the version identifier is implemented by using at least one bit. For example, it is assumed that 1 bit indicates the version identifier. If the bit is set to "0", it indicates that the first AI model is applicable to resolving a problem of high complexity. If the bit is set to "1", it indicates that the first AI model is applicable to resolving a problem of low complexity. It should be understood that the foregoing descriptions are merely examples for description, and no limitations are imposed.

The foregoing describes the identifiers of the AI model.

Optionally, the identifier of the AI model has a validity period. For example, the identifier of the AI model corresponds to a valid time, and the valid time may be implemented by using a timer. After the timer expires, the identifier of the AI model becomes invalid. For another example, when at least one of operations such as update, activation, or re-registration is performed based on the identifier of the AI model, the valid time may be updated, for example, the timer is restarted. For another example, when the identifier of the AI model is invalid, another apparatus may be notified that the identifier of the AI model is invalid.

When it is determined, based on the identifier of the AI model, whether an AI model that matches the AI model is deployed, it may be first determined whether the identifier of the AI model is within the validity period. When the identifier of the AI model is within the validity period, whether the AI model that matches the AI model is deployed is determined based on the identifier of the AI model.

A manner of obtaining the validity period of the identifier of the AI model is not limited. The first communication apparatus and the second communication apparatus are used as an example. In a possible implementation, when sending the identifier of the first AI model to the second communication apparatus, the first communication apparatus sends the validity period of the identifier of the first AI model; and when determining that the identifier of the first AI model is within the validity period, the second communication apparatus determines, based on the identifier of the first AI model, whether the AI model that matches the first AI model is deployed. The identifier of the first AI model and the validity period of the identifier of the first AI model may be carried in same signaling, or may be carried in different signaling. This is not limited. In another possible implementation, the second communication apparatus knows the validity period of the identifier of the first AI model. In this way, after receiving the identifier of the first AI model, when determining that the identifier of the first AI model is within the validity period, the second communication apparatus determines, based on the identifier of the first AI model, whether the AI model that matches the first AI model is deployed. It may be understood that the foregoing two implementations are examples for description, and no limitations are imposed herein. For example, in another possible implementation, when sending the identifier of the AI model, the communication apparatus sends a valid identifier of an AI model or an identifier that is of an AI model and whose validity period is greater than a threshold.

The following describes a manner of transmitting an identifier of an AI model.

2. Manner of transmitting the identifier of the AI model

When the first communication apparatus sends the identifier of the first AI model, the following two possible implementations may be included.

In a possible implementation, the identifier of the first AI model includes at least one of the following: a type identifier of the first communication apparatus to which the first AI model belongs, an identifier of the first communication apparatus to which the first AI model belongs, a vendor identifier of the first communication apparatus to which the first AI model belongs, a function identifier of the first AI model, a scenario identifier to which the first AI model is applicable, a dataset identifier of the first AI model, a communication parameter identifier to which the first AI model is applicable, or a version identifier of the first AI model.

Based on this implementation, the first communication apparatus may send at least one of the foregoing identifiers. In this way, the at least one of the foregoing identifiers may be directly obtained based on the identifier of the first AI model. It may be understood that the foregoing identifiers may be carried in same signaling, or may be carried in different signaling. This is not limited.

In another possible implementation, the identifier of the first AI model is information, and at least one of the following may be obtained based on the information: a type identifier of the first communication apparatus to which the first AI model belongs, an identifier of the first communication apparatus to which the first AI model belongs, a vendor identifier of the first communication apparatus to which the first AI model belongs, a function identifier of the first AI model, a scenario identifier to which the first AI model is applicable, a dataset identifier of the first AI model, a communication parameter identifier to which the first AI model is applicable, or a version identifier of the first AI model. In other words, the foregoing information has a correspondence with at least one of the foregoing identifiers.

Based on this implementation, the first communication apparatus may send one piece of information, and the at least one of the foregoing identifiers may be indirectly obtained based on the information.

3. Manner of determining an identifier of an AI model

Optionally, the identifier of the AI model is predefined and/or determined by at least one apparatus. The following describes three possible implementations.

In a first possible implementation, the identifier of the AI model is predefined, for example, predefined in a standard.

Based on this implementation, a quantity of fields, a sequence of fields, and a length of each field in the identifier of the AI model may be predefined. Based on this, the communication apparatuses have a consistent understanding of meanings of fields in the AI model.

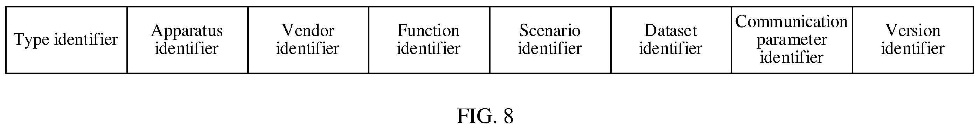

FIG. 8 is a diagram of an identifier of an AI model applicable to an embodiment of this application. As shown in FIG. 8, the identifier of the AI model includes eight fields, and the eight fields sequentially carry a type identifier, an apparatus identifier, a vendor identifier, a function identifier, a scenario identifier, a dataset identifier, a communication parameter identifier, and a version identifier. If the identifier of the AI model is predefined, in identifiers of different AI models, quantities of fields, sequences of fields, and lengths of all fields are the same, and a difference lies in that values of the fields may be different.

In a second possible implementation, the identifier of the AI model is determined by at least one apparatus.

Based on this implementation, a quantity of fields, a sequence of fields, and a length of each field in the identifier of the AI model may be customized. For example, quantities of fields in identifiers of different AI models may be different, or sequences of fields may be different. Specifically, this may be configured based on an actual situation. Based on this, each communication apparatus understands meanings of fields in the AI model that are determined by the communication apparatus.

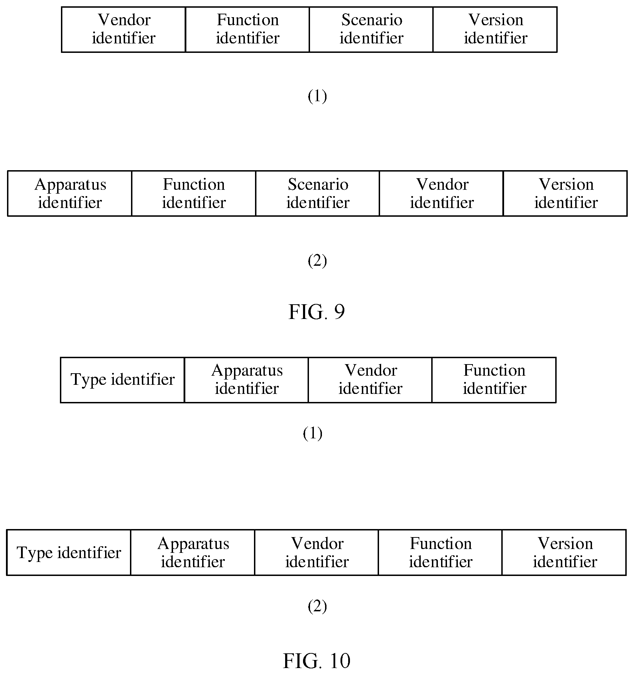

FIG. 9 is another diagram of an identifier of an AI model applicable to an embodiment of this application. As shown in (1) in FIG. 9, the identifier of the AI model includes four fields, and the four fields sequentially carry a vendor identifier, a function identifier, a scenario identifier, and a version identifier. As shown in (2) in FIG. 9, the identifier of the AI model includes five fields, and the five fields sequentially carry an apparatus identifier, a function identifier, a scenario identifier, a vendor identifier, and a version identifier.

A first AI model is used as an example. The first AI model may be determined by a first communication apparatus, or may be determined by another communication apparatus. This is not limited. The following describes three examples.

In a first example, a communication apparatus on which an AI model is deployed determines an identifier of the AI model. A first AI model is used as an example. An identifier of the first AI model may be determined by the first communication apparatus.

In a second example, a communication apparatus that trains an AI model determines an identifier of the AI model. A first AI model is used as an example. If the first AI model is obtained through training by the first communication apparatus, an identifier of the first AI model may be determined by the first communication apparatus; or if the first AI model is obtained through training jointly by the first communication apparatus and the second communication apparatus, an identifier of the first AI model may be determined by the first communication apparatus and the second communication apparatus through negotiation.

In a third example, a third party determines an identifier of an AI model. The third party may be, for example, a core network, may be an access network device, may be an operation, administration, and maintenance (operation, administration, and maintenance, OAM) system, may be a central management node, may be a model management node, or may be an AI node. The AI node may communicate with each communication apparatus. In this example, optionally, when allocating the identifier of the AI model, the third party may consider a valid range of the identifier of the AI model. The valid range may be one cell, a plurality of cells, or a same network (for example, in a public land mobile network (public land mobile network, PLMN)). For example, if the valid range of the identifier of the AI model is a cell, a communication device uses the identifier of the AI model in the cell. In an example, a same AI model may have different identifiers of the AI model in different cells.

In a third possible implementation, some identifiers in the identifiers of the AI model are predefined, and the some identifiers are determined by at least one apparatus.

Based on this implementation, a sequence of some fields in the identifier of the AI model and lengths of the fields may be predefined, and a quantity, a sequence, lengths, and the like of other fields may be configured by at least one apparatus based on an actual situation. Based on this, the communication apparatuses have a consistent understanding of meanings of some fields in the AI model.

FIG. 10 is another diagram of an identifier of an AI model applicable to an embodiment of this application. It is assumed that a sequence and lengths of first three fields in the identifier of the AI model are predefined, and the three fields sequentially carry a type identifier, an apparatus identifier, and a vendor identifier. As shown in (1) in FIG. 10, in addition to the foregoing three fields, the identifier of the AI model further includes one field, and the one field carries a function identifier. As shown in (2) in FIG. 10, in addition to the foregoing three fields, the identifier of the AI model further includes two fields, and the two fields carry a function identifier and a version identifier.

It may be understood that the foregoing several possible implementations are examples for description, and no limitations are imposed herein. For example, a format of the identifier of the AI model is predefined, and content of the AI model is determined by a communication apparatus.

In an implementation, the communication apparatus may determine the identifier of the AI model, and register the identifier of the AI model with another apparatus. In another implementation, the communication apparatus may request the identifier of the AI model from another communication apparatus, and the another communication apparatus allocates the identifier of the AI model. The communication apparatus may be a communication apparatus to which the AI model belongs, or another apparatus different from the communication apparatus to which the AI model belongs. When the communication apparatus is another apparatus different from the communication apparatus to which the AI model belongs, the communication apparatus may notify the communication apparatus to which the AI model belongs of the identifier of the AI model.

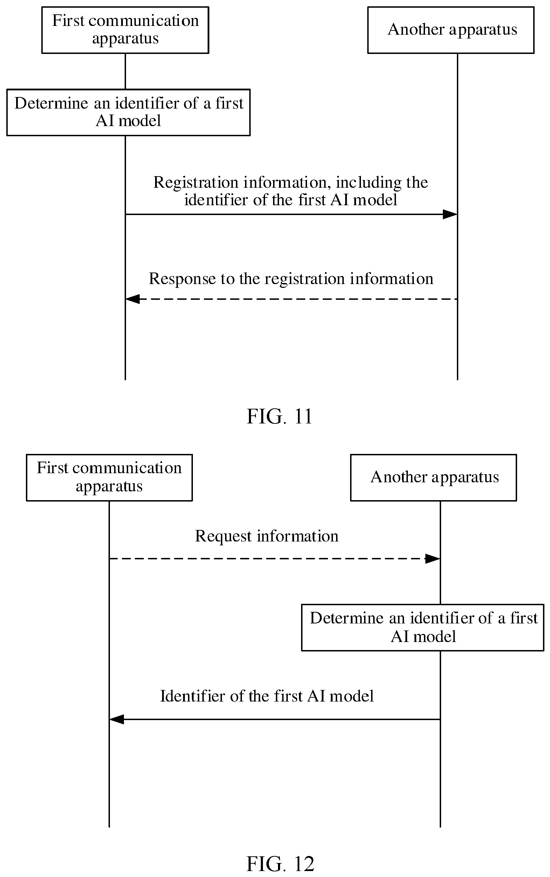

The following uses a first AI model in a first communication apparatus as an example to describe the two implementations with reference to FIG. 11 and FIG. 12. It may be understood that the two implementations may be used in combination with one or more embodiments of other parts related to the identifier of the AI model, for example, information indicated by the identifier of the AI model and/or a determining manner, or may be decoupled from one or more embodiments of other parts related to the identifier of the AI model.

In a first possible implementation, the first communication apparatus determines the identifier of the first AI model, and registers the identifier of the first AI model with another apparatus (for example, a third party, a second communication apparatus, or a third communication apparatus).

FIG. 11 is a diagram of registering an identifier of an AI model applicable to an embodiment of this application. As shown in FIG. 11, after determining the identifier of the first AI model, a first communication apparatus sends registration information to another apparatus, where the registration information includes the identifier of the first AI model.

Optionally, the another apparatus may send a response to the registration information to the first communication apparatus, where the response to the registration information notifies whether registration succeeds. Alternatively, when the registration succeeds, the another apparatus may not send a response to the registration information to the first communication apparatus. If the first communication apparatus does not receive the response to the registration information within a period of time, the first communication apparatus may consider by default that the registration succeeds. In an example, a start moment of the period of time may be a moment at which the first communication apparatus sends the registration information, and duration of the period of time may be predefined, or may be estimated based on a historical situation. This is not limited. In an example, the period of time may be implemented by using a timer.

For example, when an identifier (for example, a version identifier) in identifiers of the first AI model that the first communication apparatus requests to register is already occupied, in a possible implementation, the another apparatus may send the response to the registration information to the first communication apparatus, where the response to the registration information indicates the first communication apparatus to change the version identifier of the model; or in another possible implementation, the another apparatus may reallocate a version identifier to the first AI model, and send the reallocated version identifier to the first communication apparatus.

Optionally, in addition to the identifier of the first AI model, the registration information may further include other information. Optionally, the registration information includes at least one of the following information: a type of the first communication apparatus to which the first AI model belongs, information of the first communication apparatus to which the first AI model belongs, a vendor of the first communication apparatus to which the first AI model belongs, a function of the first AI model, a scenario to which the first AI model is applicable, a dataset of the first AI model, a communication parameter to which the first AI model is applicable, or a version of the first AI model. For example, the registration information includes a version identifier of the first AI model and version information of the first AI model. Based on this, the first communication apparatus and the another apparatus may align understandings of the version identifier, and obtain the version information indicated by the version identifier.

Optionally, when the first communication apparatus uses the registration information to carry at least one of the foregoing identifiers, the first communication apparatus may compress a part of the identifiers. In this way, a quantity of bits occupied for sending each identifier can be reduced, and signaling overheads can be reduced. For example, the identifier of the AI model indicates a vendor of the AI model and a function of the AI model. It is assumed that there are eight vendors of the AI model. 3 bits are needed if the vendor identifier of the AI model needs to be carried. It is assumed that there are four functions of the AI model. 2 bits are needed if the function identifier of the AI model needs to be carried. Therefore, 5 bits are needed if the first communication apparatus uses the registration information to carry the vendor identifier of the AI model and the function identifier of the AI model. Considering that not all vendors and functions may appear within a valid range of the AI model, when the identifier of the AI model is registered, the vendor of the AI model and the function of the AI model may be jointly represented by using an identifier less than 5 bits. For example, the vendor of the AI model and the function of the AI model may be represented by 3 bits. A specific identifier allocated to each combination of a vendor and a function may be determined by an entity that allocates an AI model (for example, the first communication apparatus, or another communication apparatus different from the first communication apparatus, where the another communication apparatus deploys the AI model on the first communication apparatus after training the AI model). This is not limited.

In a second possible implementation, another apparatus (for example, a third party, a second communication apparatus, or a third communication apparatus) determines the identifier of the first AI model, and notifies the first communication apparatus of the identifier of the first AI model.

FIG. 12 is a diagram of notifying an identifier of an AI model applicable to an embodiment of this application. As shown in FIG. 12, after determining the identifier of the first AI model, another apparatus sends the identifier of the first AI model to a first communication apparatus. Optionally, before the another apparatus determines the identifier of the first AI model, the first communication apparatus sends request information to the another apparatus, where the request information is used to request the another apparatus to allocate the identifier of the first AI model to the first AI model. Optionally, the request information includes at least one of the following information: a type of the first communication apparatus to which the first AI model belongs, information of the first communication apparatus to which the first AI model belongs, a vendor of the first communication apparatus to which the first AI model belongs, a function of the first AI model, a scenario to which the first AI model is applicable, a dataset of the first AI model, a communication parameter to which the first AI model is applicable, or a version of the first AI model.

For example, if the request information includes the dataset of the first AI model, the another apparatus allocates the dataset identifier of the first AI model to the first AI model. For example, it is assumed that there are two datasets used for training to obtain the AI model: a first dataset and a second dataset. If a dataset of the first AI model that is included in the request information is the first dataset, a dataset identifier allocated by the another apparatus to the first AI model is "0". If a dataset of the first AI model that is included in the request information is the second dataset, a dataset identifier allocated by the another apparatus to the first AI model is "1". Other identifiers are similar. Details are not described herein again.

For example, the identifier of the AI model that is allocated by the another apparatus to the first communication apparatus may not include a specific identifier of each piece of information, such as a dataset identifier or a function identifier. Instead, the at least one of the foregoing information is comprehensively considered for the allocated identifier of the AI model. The identifier of the AI model may be used to distinguish between the at least one of the foregoing different information, but does not include an explicit field of each piece of information. In other words, the identifier of the AI model has a correspondence with the at least one of the foregoing information.

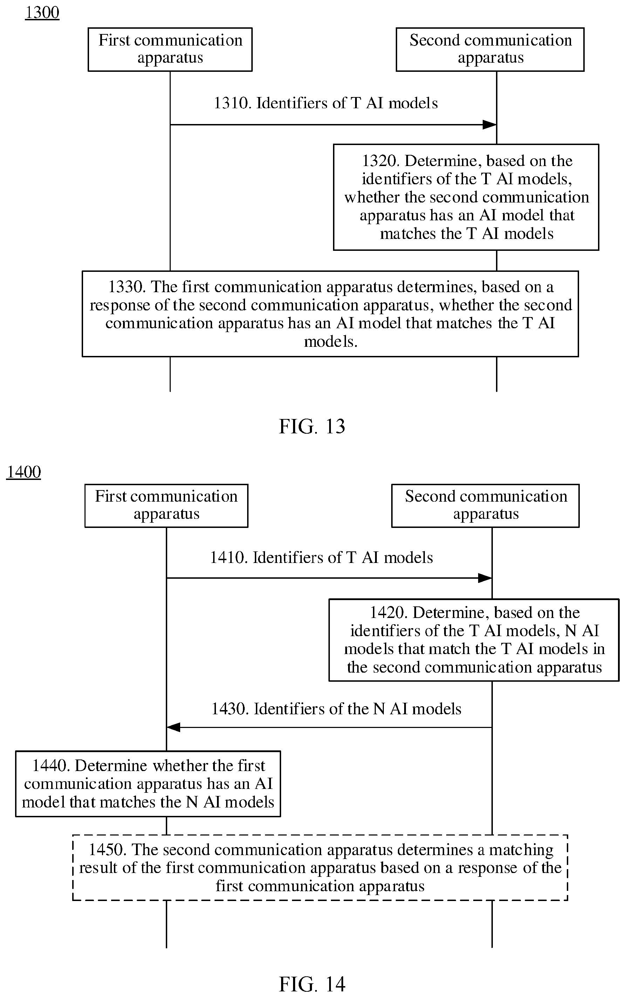

For ease of understanding, an example in which a first communication apparatus and a second communication apparatus interact with each other is used below to describe, with reference to FIG. 13 to FIG. 15, a procedure applicable to embodiments of this application. For content that is not described in detail below, refer to the descriptions in the method 600. In addition, for brevity, the AI model deployed on the communication apparatus is briefly referred to as an AI model in the communication apparatus.

FIG. 13 is a diagram of a communication method 1300 according to an embodiment of this application. The method 1300 is applicable to a scenario in which a first communication apparatus sends an identifier of at least one AI model to s second communication apparatus, and the second communication apparatus performs AI model matching. The method 1300 shown in FIG. 13 may include the following steps.

1310. The first communication apparatus sends identifiers of T AI models to the second communication apparatus.

T is an integer greater than or equal to 1. The T AI models may be available AI models in the first communication apparatus, or may be some AI models in available AI models in the first communication apparatus.

For the identifier of the AI model, refer to the related descriptions in the method 600. Details are not described herein again.

1320. The second communication apparatus determines, based on the identifiers of the T AI models, whether the second communication apparatus has an AI model that matches the T AI models.

After receiving the identifiers of the T AI models, the second communication apparatus determines whether the second communication apparatus has an AI model that matches the T AI models.

In a possible implementation, the second communication apparatus determines, based on the identifiers of the T AI models and an association relationship, whether the second communication apparatus has an AI model that matches the T AI models. The association relationship represents a relationship between identifiers of AI models that match each other. For example, the second communication apparatus maintains the association relationship. For another example, the first communication apparatus maintains the association relationship, and the first communication apparatus sends the association relationship to the second communication apparatus. For another example, another apparatus maintains the association relationship, and after receiving an identifier of the first communication apparatus, the second communication apparatus requests the association relationship from the another apparatus. For the association relationship, refer to the related descriptions in the method 600. Details are not described herein again.

1330. The first communication apparatus determines, based on a response of the second communication apparatus, whether the second communication apparatus has an AI model that matches the T AI models.

Descriptions are separately provided below in two cases.

In a first possible case, the second communication apparatus has no an AI model that matches the T AI models.

In this case, the first communication apparatus may learn, in any one of the following manners, that the second communication apparatus has no AI model that matches the T AI models.

In a possible implementation, if the second communication apparatus has no AI model that matches the T AI models, the second communication apparatus sends feedback information to the first communication apparatus, where the feedback information indicates that the second communication apparatus has no AI model that can match the T AI models. In an example, in this implementation, the feedback information may be a negative acknowledgment.

In another possible implementation, if the second communication apparatus has no AI model that matches the T AI models, the second communication apparatus does not send feedback information to the first communication apparatus. In an example, in this implementation, the feedback information may be an acknowledgment.

For the foregoing two implementations, refer to the related descriptions of determining, by the first communication apparatus based on the response, whether the second AI model is deployed on the second communication apparatus in the method 600. Details are not described herein again.

In a second possible case, the second communication apparatus has an AI model that matches the T AI models. Descriptions are separately provided below in three cases.

Case 1: T is equal to 1, and the second communication apparatus has an AI model that matches the T AI models.

In a possible implementation, if T is equal to 1, and the second communication apparatus has an AI model that matches the T AI models, the second communication apparatus may send feedback information to the first communication apparatus, where the feedback information indicates that the second communication apparatus has an AI model that can match the T AI models. In an example, the feedback information may be an acknowledgment.

In another possible implementation, if T is equal to 1, and the second communication apparatus has an AI model that matches the T AI models, the second communication apparatus does not send feedback information to the first communication apparatus. In an example, the feedback information may be a negative acknowledgment.

For the foregoing two implementations, refer to the related descriptions of determining, by the first communication apparatus based on the response, whether the second AI model is deployed on the second communication apparatus in the method 600. Details are not described herein again.

Case 2: T is greater than 1, and the second communication apparatus has an AI model that matches a part (for example, denoted as T1 AI models) of the T AI models.

In a possible implementation, if T is greater than 1, and the second communication apparatus has an AI model that matches the T1 AI models, the second communication apparatus may send feedback information to the first communication apparatus, where the feedback information includes information about the T1 AI models (for example, identifiers of the T1 AI models), and the feedback information indicates that the second communication apparatus has an AI model that matches the T1 AI models. Based on this implementation, the first communication apparatus learns, based on the feedback information from the second communication apparatus, that the second communication apparatus has an AI model that matches the T1 AI models.

In another possible implementation, if T is greater than 1, and the second communication apparatus has an AI model that matches T1 AI models, the second communication apparatus may send feedback information to the first communication apparatus, where the feedback information includes information about T2 AI models (for example, identifiers of the T2 AI models), and the feedback information indicates that the second communication apparatus has no AI model that matches the T2 AI models, where the T2 AI models are AI models other than the T1 AI models in the T AI models. Based on this implementation, the first communication apparatus learns, based on the feedback information from the second communication apparatus, that the second communication apparatus has no AI model that matches the T2 AI models, and considers by default that the second communication apparatus has an AI model that matches an AI model (that is, the T1 AI models) other than the T2 AI models in the T AI models.

Case 3: T is greater than 1, and the second communication apparatus has an AI model that matches all of the T AI models.

In a possible implementation, if T is greater than 1, and the second communication apparatus has an AI model that matches all of the T AI models, the second communication apparatus may send feedback information to the first communication apparatus, where the feedback information indicates that the second communication apparatus has an AI model that matches the T AI models. In an example, the feedback information may be an acknowledgment.

In another possible implementation, if T is greater than 1, and the second communication apparatus has an AI model that matches all of the T AI models, the second communication apparatus does not send feedback information to the first communication apparatus. In an example, the feedback information may be a negative acknowledgment.

For the foregoing two implementations, refer to the related descriptions of determining, by the first communication apparatus based on the response, whether the second AI model is deployed on the second communication apparatus in the method 600. Details are not described herein again.

In another possible implementation, if T is greater than 1, and the second communication apparatus has an AI model that matches all of the T AI models, the second communication apparatus may send feedback information to the first communication apparatus, where the feedback information includes information about the T AI models (for example, identifiers of the T AI models), and the feedback information indicates that the second communication apparatus has an AI model that matches the T AI models.

FIG. 14 is a diagram of a communication method 1400 according to another embodiment of this application. The method 1400 is applicable to a scenario in which a first communication apparatus sends an identifier of at least one AI model to a second communication apparatus, and the second communication apparatus and the first communication apparatus perform AI model matching. The method 1400 shown in FIG. 14 may include the following steps.

1410. The first communication apparatus sends identifiers of T AI models to the second communication apparatus.

Step 1410 is similar to step 1310. Details are not described herein again.

1420. The second communication apparatus determines, based on the identifiers of the T AI models, N AI models that match the T AI models in the second communication apparatus.

After receiving the identifiers of the T AI models, the second communication apparatus determines whether the second communication apparatus has an AI model that matches the T AI models. It is assumed that the second communication apparatus has an AI model that matches the T AI models, and the AI model that matches the T AI models is the N AI models.

N is an integer greater than 1 or equal to 1. The N AI models may be an AI model that is available in the second communication apparatus and that matches an AI model in the T AI models, that is, the T AI models include an AI model that matches the N AI models.

Step 1420 is similar to step 1320. Details are not described herein again.

1430. The second communication apparatus sends identifiers of the N AI models to the first communication apparatus.

1440. The first communication apparatus determines whether the first communication apparatus has an AI model that matches the N AI models.

Optionally, the method 1400 further includes step 1450.

1450. The second communication apparatus determines a matching result of the first communication apparatus based on a response of the first communication apparatus.

Specifically, the second communication apparatus may determine, based on the response of the first communication apparatus, whether the first communication apparatus has an AI model that matches the N AI models, that is, determine a result of matching the N AI models by the first communication apparatus.

In this solution, both the second communication apparatus and the first communication apparatus perform AI model matching confirmation. In this way, a probability that an AI model matching error occurs can be reduced. For details, refer to the related descriptions in the foregoing method 600.

Descriptions are separately provided below in two cases.

In a first possible case, the first communication apparatus determines that the first communication apparatus has no AI model that matches the N AI models.

In a possible implementation, if the first communication apparatus determines that the first communication apparatus has no AI model that matches the N AI models, the first communication apparatus sends feedback information to the second communication apparatus, where the feedback information indicates that the first communication apparatus has no AI model that matches the N AI models. In an example, in this implementation, the feedback information may be a negative acknowledgment.

In another possible implementation, if the first communication apparatus determines that the first communication apparatus has no AI model that matches the N AI models, the first communication apparatus does not send feedback information to the second communication apparatus. In an example, in this implementation, the feedback information may be an acknowledgment.

For the foregoing two implementations, refer to the related descriptions of determining, by the first communication apparatus based on the response, whether the second AI model is deployed on the second communication apparatus in the method 600. Details are not described herein again.

In a second possible case, the first communication apparatus determines that the first communication apparatus has an AI model that matches the N AI models. Descriptions are separately provided below in three cases.

Case 1: N is equal to 1, and the first communication apparatus determines that the first communication apparatus has an AI model that matches the N AI models.

In a possible implementation, if N is equal to 1, and the first communication apparatus determines that the first communication apparatus has an AI model that matches the N AI models, the first communication apparatus may send feedback information to the second communication apparatus, where the feedback information indicates that the first communication apparatus has an AI model that matches the N AI models. In an example, the feedback information may be an acknowledgment.

In another possible implementation, if N is equal to 1, and the first communication apparatus determines that the first communication apparatus has an AI model that matches the N AI models, the first communication apparatus does not send feedback information to the first communication apparatus. In an example, the feedback information may be a negative acknowledgment.

For the foregoing two implementations, refer to the related descriptions of determining, by the first communication apparatus based on the response, whether the second AI model is deployed on the second communication apparatus in the method 600. Details are not described herein again.

Case 2: N is greater than 1, and the first communication apparatus determines that the first communication apparatus has an AI model that matches a part (for example, denoted as N1 AI models) of the N AI models.

In a possible implementation, if N is greater than 1, and the first communication apparatus determines that the first communication apparatus has an AI model that matches the N1 AI models, the first communication apparatus may send feedback information to the second communication apparatus, where the feedback information includes information about the N1 AI models (for example, identifiers of the N1 AI models), and the feedback information indicates that the first communication apparatus has an AI model that matches the N1 AI models.

In another possible implementation, if N is greater than 1, and the first communication apparatus determines that the first communication apparatus has an AI model that matches the N1 AI models, the first communication apparatus may send feedback information to the second communication apparatus, where the feedback information includes information about N2 AI models (for example, identifiers of the N2 AI models), and the feedback information indicates that the first communication apparatus has no AI model that matches the N2 AI models, where the N2 AI models are AI models other than the N1 AI models in the N AI models.

For the foregoing two implementations, refer to the related descriptions of Case 2 in the second possible case in the method 1300. Details are not described herein again.

Case 3: N is greater than 1, and the first communication apparatus determines that the first communication apparatus has an AI model that matches all of the N AI models.

In a possible implementation, if N is greater than 1, and the first communication apparatus determines that the first communication apparatus has an AI model that matches all of the N AI models, the first communication apparatus may send feedback information to the second communication apparatus, where the feedback information indicates that the first communication apparatus has an AI model that matches all of the N AI models. In an example, the feedback information may be an acknowledgment.

In another possible implementation, if N is greater than 1, and the first communication apparatus determines that the first communication apparatus has an AI model that matches all of the N AI models, the first communication apparatus does not send feedback information to the second communication apparatus. In an example, the feedback information may be a negative acknowledgment.

In another possible implementation, if N is greater than 1, and the first communication apparatus determines that the first communication apparatus has an AI model that matches all of the N AI models, the first communication apparatus may send feedback information to the second communication apparatus, where the feedback information includes information about the N AI models (for example, identifiers of the N AI models), and the feedback information indicates that the first communication apparatus has an AI model that matches all of the N AI models.

For the foregoing implementations, refer to the related descriptions of Case 3 in the second possible case in the method 1300. Details are not described herein again.

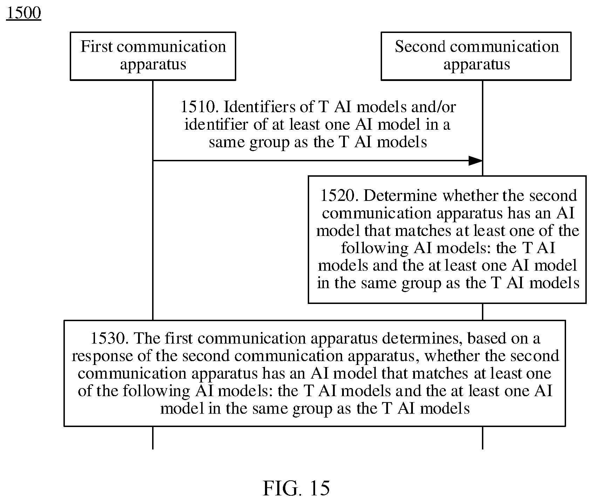

FIG. 15 is a diagram of a communication method 1500 according to another embodiment of this application. The method 1500 is applicable to a scenario in which a first communication apparatus sends an identifier of at least one AI model and/or an identifier of an AI model in a same group as the at least one AI model to a second communication apparatus, and the second communication apparatus performs AI model matching. The method 1500 shown in FIG. 15 may include the following steps.

1510. The first communication apparatus sends identifiers of T AI models and/or an identifier of at least one AI model in a same group as the T AI models to the second communication apparatus.

It can be learned that, different from step 1310, in step 1510, the first communication apparatus may send the identifiers of the T AI models and/or the identifier of the at least one AI model in the same group as the T AI models to the second communication apparatus. For a solution related to AI model grouping, refer to the related descriptions in the method 600. Details are not described herein again.

1520. The second communication apparatus determines whether the second communication apparatus has an AI model that matches at least one of the following AI models: the T AI models and the at least one AI model in the same group as the T AI models.

Specifically, in step 1520, the second communication apparatus determines, based on the identifiers of the T AI models and/or the identifier of the at least one AI model in the same group as the T AI models, whether the second communication apparatus has an AI model that matches at least one of the following AI models: the T AI models and the at least one AI model in the same group as the T AI models.

Step 1520 is similar to step 1320. A difference lies in that in step 1520, the second communication apparatus may determine whether the second communication apparatus has an AI model that matches at least one of the following AI models: the T AI models and the at least one AI model in the same group as the T AI models. For the solution of AI model grouping, refer to the related descriptions in the method 600. Details are not described herein again.

Optionally, priorities of AI models in a same group of AI models are different. When performing model matching, the second communication apparatus may preferentially consider whether there is an AI model that matches an AI model with a high priority. For a priority of the AI model, refer to the related descriptions in the method 600. Details are not described herein again.

1530. The first communication apparatus determines, based on a response of the second communication apparatus, whether the second communication apparatus has an AI model that matches at least one of the following AI models: the T AI models and the at least one AI model in the same group as the T AI models.

For step 1530, refer to the related descriptions in step 1330. Details are not described herein again.

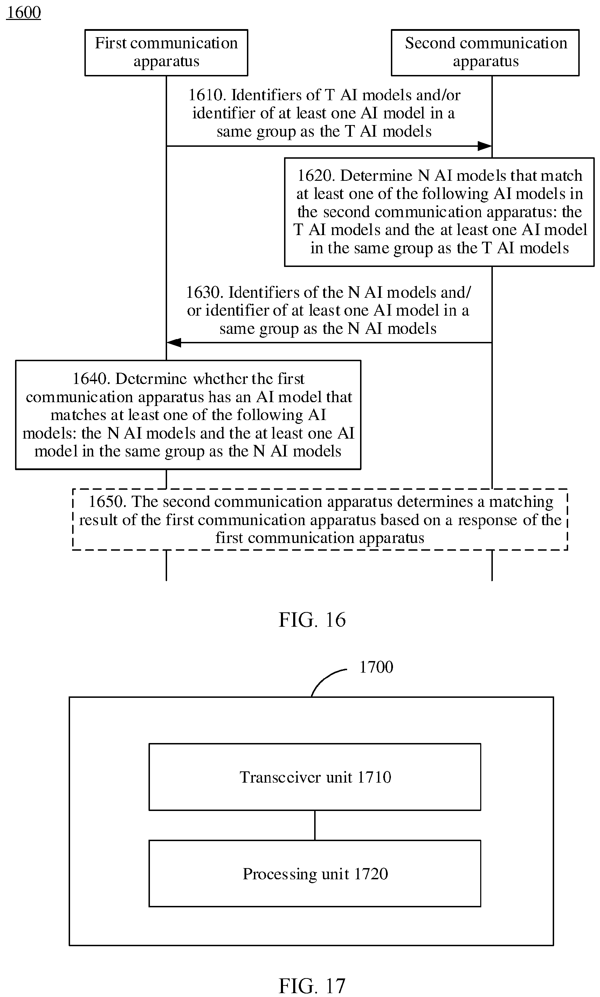

FIG. 16 is a diagram of a communication method 1600 according to another embodiment of this application. The method 1600 is applicable to a scenario in which a first communication apparatus sends an identifier of at least one AI model and/or an identifier of an AI model in a same group as the at least one AI model to a second communication apparatus, and the second communication apparatus and the first communication apparatus perform AI model matching. The method 1600 shown in FIG. 16 may include the following steps.

1610. The first communication apparatus sends identifiers of T AI models and/or an identifier of at least one AI model in a same group as the T AI models to the second communication apparatus.

It can be learned that, different from step 1510, in step 1610, the first communication apparatus may send the identifiers of the T AI models and/or the identifier of the at least one AI model in the same group as the T AI models to the second communication apparatus.

For step 1610, refer to the related descriptions in step 1510. Details are not described herein again.

1620. The second communication apparatus determines N AI models that match at least one of the following AI models in the second communication apparatus: the T AI models and the at least one AI model in the same group as the T AI models.

Specifically, in step 1620, the second communication apparatus determines, based on the identifiers of the T AI models and/or the identifier of the at least one AI model in the same group as the T AI models, the N AI models that match the at least one of the following AI models in the second communication apparatus: the T AI models and the at least one AI model in the same group as the T AI models.

For example, if the first communication apparatus sends the identifiers of the T AI models to the second communication apparatus in step 1610, the N AI models are AI models that match a part or all of the T AI models.

For another example, if the first communication apparatus sends the identifier of the at least one AI model in the same group as the T AI models to the second communication apparatus in step 1610, the N AI models are AI models that match a part or all of the at least one AI model.

1630. The second communication apparatus sends identifiers of the N AI models and/or an identifier of at least one AI model in a same group as the N AI models to the first communication apparatus.

For step 1630, refer to the related descriptions in step 1510. Details are not described herein again.

1640. The first communication apparatus determines whether the first communication apparatus has an AI model that matches at least one of the following AI models: the N AI models and the at least one AI model in the same group as the N AI models.

For step 1640, refer to the related descriptions in step 1520. Details are not described herein again.

Optionally, the method 1600 further includes step 1650.

1650. The second communication apparatus determines a matching result of the first communication apparatus based on a response of the first communication apparatus.

Step 1650 is similar to step 1450. Details are not described herein again.

It may be understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that in the foregoing method embodiments, a method and an operation implemented by an encoder may also be implemented by a component (for example, a chip or a circuit) in the encoder. In addition, a method and an operation implemented by a decoder may also be implemented by a component (for example, a chip or a circuit) of the decoder. This is not limited.

The foregoing describes, in detail with reference to FIG. 6 to FIG. 16, the methods provided in embodiments of this application. The following describes, in detail with reference to FIG. 11 to FIG. 13, apparatuses provided in embodiments of this application. It should be understood that descriptions of apparatus embodiments correspond to the descriptions of the method embodiments. Therefore, for content that is not described in detail, refer to the foregoing method embodiments. For brevity, details are not described herein again.

FIG. 17 is a schematic block diagram of a communication apparatus 1700 according to an embodiment of this application. The apparatus 1700 includes a transceiver unit 1710 and a processing unit 1720. The transceiver unit 1710 may be configured to implement a corresponding communication function. The transceiver unit 1710 may also be referred to as a communication interface or a communication unit. The processing unit 1720 may be configured to perform processing, for example, determine whether AI models match each other.

Optionally, the apparatus 1700 may further include a storage unit. The storage unit may be configured to store instructions and/or data. The processing unit 1720 may read the instructions and/or the data in the storage unit, so that the apparatus implements the foregoing method embodiments.

In a design, the apparatus 1700 is configured to perform the steps or procedures performed by the communication apparatus in the foregoing method embodiments, the transceiver unit 1710 is configured to perform the receiving and sending-related operations on the communication apparatus side in the foregoing method embodiments, and the processing unit 1720 is configured to perform the processing-related operation on the communication apparatus side in the foregoing method embodiments.

In a possible implementation, the apparatus 1700 is configured to perform the steps or the procedures performed by the second communication apparatus or the third communication apparatus in the embodiment shown in FIG. 6, or the steps or the procedures performed by the second communication apparatus in the embodiments shown in FIG. 13 to FIG. 16. Optionally, the transceiver unit 1710 is configured to receive an identifier of a first artificial intelligence AI model from a first communication apparatus; and the processing unit 1720 is configured to determine, based on the identifier of the first AI model, whether a second AI model is deployed on the second communication apparatus, where the second AI model is an AI model that matches the first AI model.

In another possible implementation, the apparatus 1700 is configured to perform the steps or the procedures performed by the first communication apparatus in the embodiment shown in FIG. 6, or the steps or the procedures performed by the first communication apparatus in the embodiments shown in FIG. 13 to FIG. 16. Optionally, the transceiver unit 1710 is configured to send an identifier of a first artificial intelligence AI model, where the identifier of the first AI model is used to determine whether a second AI model that matches the first AI model is deployed on a second communication apparatus; and the processing unit 1720 is configured to determine, based on a response, whether the second AI model is deployed on the second communication apparatus.

In another possible implementation, the apparatus 1700 is configured to perform the steps or the procedures performed by the first communication apparatus in the embodiment shown in FIG. 11. Optionally, the processing unit 1720 is configured to determine an identifier of a first AI model; and the transceiver unit 1710 is configured to send registration information to another apparatus, where the registration information includes the identifier of the first AI model. Alternatively, the apparatus 1700 is configured to perform the steps or the procedures performed by the first communication apparatus in the embodiment shown in FIG. 12. Optionally, the transceiver unit 1710 is configured to receive an identifier of a first AI model from another apparatus.

In another possible implementation, the apparatus 1700 is configured to perform the steps or the procedures performed by the another apparatus in the embodiment shown in FIG. 11. Optionally, the transceiver unit 1710 is configured to receive registration information from a first communication apparatus. Alternatively, the apparatus 1700 is configured to perform the steps or the procedures performed by the another apparatus in the embodiment shown in FIG. 12. Optionally, the processing unit 1720 is configured to determine an identifier of a first AI model; and the transceiver unit 1710 is configured to send the identifier of the first AI model to a first communication apparatus.

It should be understood that a specific process in which the units perform the foregoing corresponding steps is described in detail in the foregoing method embodiments. For brevity, details are not described herein again.

It should be further understood that the apparatus 1700 herein is presented in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1700 may be specifically the communication apparatus (for example, the first communication apparatus, the second communication apparatus, or the third communication apparatus) in the foregoing embodiments, and may be configured to perform procedures and/or steps corresponding to the communication apparatus in the foregoing method embodiments. To avoid repetition, details are not described herein again.

The apparatus 1700 in the foregoing solutions has a function of implementing corresponding steps performed by the communication apparatus (for example, the first communication apparatus, the second communication apparatus, the third communication apparatus, or another apparatus) in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit like the processing unit may be replaced by a processor, to separately perform a receiving and sending operation and a related processing operation in the method embodiments.

In addition, the transceiver unit 1710 may alternatively be a transceiver circuit (for example, the transceiver circuit may include a receiver circuit and a transmitter circuit), and the processing unit may be a processing circuit.

It should be noted that the apparatus in FIG. 17 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

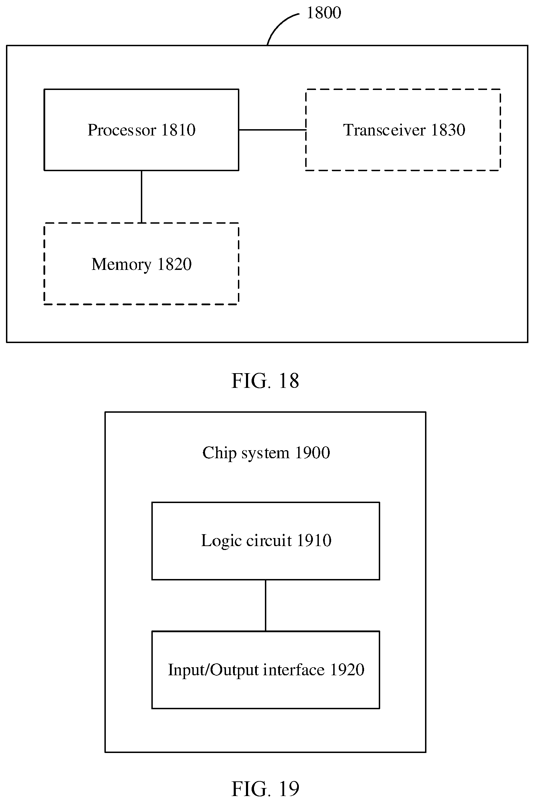

FIG. 18 is a diagram of another communication apparatus 1800 according to an embodiment of this application. The apparatus 1800 includes a processor 1810. The processor 1810 is coupled to a memory 1820. The memory 1820 is configured to store a computer program or instructions and/or data. The processor 1810 is configured to: execute the computer program or the instructions stored in the memory 1820 or read the data stored in the memory 1820 to perform the methods in the foregoing method embodiments.

Optionally, there are one or more processors 1810.

Optionally, there are one or more memories 1820.

Optionally, the memory 1820 and the processor 1810 are integrated together or separately disposed.

Optionally, as shown in FIG. 18, the apparatus 1800 further includes a transceiver 1830. The transceiver 1830 is configured to: receive and/or send a signal. For example, the processor 1810 is configured to control the transceiver 1830 to receive and/or send a signal.

For example, the processor 1810 may have a function of the processing unit 1720 shown in FIG. 17, the memory 1820 may have a function of the storage unit, and the transceiver 1830 may have a function of the transceiver unit 1710 shown in FIG. 17.

In a solution, the apparatus 1800 is configured to implement operations performed by the communication apparatus (for example, the first communication apparatus, the second communication apparatus, the third communication apparatus, or another apparatus) in the foregoing method embodiments.

For example, the processor 1810 is configured to execute the computer program or the instructions stored in the memory 1820, to implement related operations of the communication apparatus (for example, the first communication apparatus, the second communication apparatus, the third communication apparatus, or another apparatus) in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be further noted that the memory described in this specification is intended to include, but is not limited to, these and any other appropriate type of memory.

FIG. 19 is a diagram of a chip system 1900 according to an embodiment of this application. The chip system 1900 (or may also be referred to as a processing system) includes a logic circuit 1910 and an input/output interface (input/output interface) 1920.

The logic circuit 1910 may be a processing circuit in the chip system 1900. The logic circuit 1910 may be coupled to and connected to a storage unit, and invoke instructions in the storage unit, so that the chip system 1900 can implement the methods and functions in embodiments of this application. The input/output interface 1920 may be an input/output circuit in the chip system 1900, and outputs information processed by the chip system 1900, or inputs to-be-processed data or signaling information to the chip system 1900 for processing.

Specifically, for example, if the chip system 1900 is installed in a first communication apparatus, the logic circuit 1910 is coupled to the input/output interface 1920, and the logic circuit 1910 may send an identifier of a first AI model to a decoder through the input/output interface 1920; or the input/output interface 1920 may input an identifier from a second AI model to the logic circuit 1910 for processing. For another example, if the chip system 1900 is installed in a second communication apparatus, the logic circuit 1910 is coupled to the input/output interface 1920, and the input/output interface 1920 may input an identifier of a first AI model from a first communication apparatus to the logic circuit 1910 for processing.

In a solution, the chip system 1900 is configured to implement operations performed by the communication apparatus (for example, the first communication apparatus, the second communication apparatus, the third communication apparatus, or another apparatus) in the foregoing method embodiments.

For example, the logic circuit 1910 is configured to implement a processing-related operation performed by the communication apparatus (for example, the first communication apparatus, the second communication apparatus, or the third communication apparatus) in the foregoing method embodiments; and the input/output interface 1920 is configured to implement a sending and/or receiving-related operation performed by the communication apparatus (for example, the first communication apparatus, the second communication apparatus, the third communication apparatus, or another apparatus) in the foregoing method embodiments.

An embodiment of this application further provides a computer-readable storage medium. The computer-readable storage medium stores computer instructions used to implement the method performed by the communication apparatus (for example, the first communication apparatus, the second communication apparatus, the third communication apparatus, or another apparatus) in the foregoing method embodiments.

For example, when the computer program is executed by a computer, the computer is enabled to implement the method performed by the communication apparatus (for example, the first communication apparatus, the second communication apparatus, the third communication apparatus, or another apparatus) in the foregoing method embodiments.

An embodiment of this application further provides a computer program product, including instructions. When the instructions are executed by a computer, the method performed by the communication apparatus (for example, the first communication apparatus, the second communication apparatus, the third communication apparatus, or another apparatus) in the foregoing method embodiments is implemented.

An embodiment of this application further provides a communication system. The communication system includes the first communication apparatus and the second communication apparatus in the foregoing embodiments. For example, the system includes the first communication apparatus and the second communication apparatus in the embodiment shown in FIG. 6. For another example, the system includes the first communication apparatus and the second communication apparatus in the embodiments shown in FIG. 13 to FIG. 16.

An embodiment of this application further provides a communication system. The communication system includes the first communication apparatus and the third communication apparatus in the foregoing embodiments. For example, the system includes the first communication apparatus and the third communication apparatus in the embodiment shown in FIG. 6.

An embodiment of this application further provides a communication system. The communication system includes the first communication apparatus and the another apparatus in the foregoing embodiments. For example, the system includes the first communication apparatus and the another apparatus in the embodiments shown in FIG. 10 and FIG. 11.

For explanations and beneficial effects of related content in any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A model matching method, comprising:

    receiving an identifier of a first artificial intelligence AI model from a first communication apparatus; and
    determining, based on the identifier of the first AI model, whether a second AI model is deployed on a second communication apparatus, wherein the second AI model is an AI model that matches the first AI model.

2.  The method according to claim 1, wherein the determining, based on the identifier of the first AI model, whether a second AI model is deployed on a second communication apparatus comprises:
    determining, based on the identifier of the first AI model and an association relationship, whether the second AI model is deployed on the second communication apparatus, wherein the association relationship represents a relationship between identifiers of AI models that match each other.

3.  The method according to claim 1 or 2, wherein the method further comprises:

    when it is determined that the second AI model is not deployed on the second communication apparatus, sending first feedback information to the first communication apparatus, wherein the first feedback information is used to feed back that the second AI model is not deployed on the second communication apparatus; or
    when it is determined that the second AI model is deployed on the second communication apparatus, sending second feedback information to the first communication apparatus, wherein the second feedback information is used to feed back that the second AI model is deployed on the second communication apparatus.

4.  The method according to any one of claims 1 to 3, wherein when it is determined that the second AI model is deployed on the second communication apparatus, the method further comprises:
    sending an identifier of the second AI model to the first communication apparatus, wherein the identifier of the second AI model is used by the first communication apparatus to determine whether the first AI model matches the second AI model.

5.  The method according to claim 4, wherein the second AI model belongs to a first group of AI models; and
    the sending an identifier of the second AI model to the first communication apparatus comprises:
    sending the identifier of the second AI model and an identifier of at least one AI model other than the second AI model in the first group of AI models to the first communication apparatus.

6.  The method according to claim 5, wherein AI models in the first group of AI models satisfy: when input information of the AI models in the first group of AI models is the same, output information is the same or a difference between output information falls within a preset range.

7.  The method according to any one of claims 1 to 6, wherein the second AI model is an AI model that matches at least one AI model in a second group of AI models, and the second group of AI models comprises the first AI model;
    the receiving an identifier of a first AI model from a first communication apparatus comprises:

    receiving the identifier of the first AI model and an identifier of at least one AI model other than the first AI model in the second group of AI models from the first communication apparatus; and
    the determining, based on the identifier of the first AI model, whether a second AI model is deployed on a second communication apparatus comprises:
    determining, based on the identifier of the first AI model and the identifier of the at least one AI model other than the first AI model in the second group of AI models, whether the second AI model is deployed on the second communication apparatus.

8.  The method according to claim 7, wherein the second group of AI models comprises the first AI model and a third AI model, and a priority of the first AI model is higher than a priority of the third AI model; and

the determining, based on the identifier of the first AI model and the identifier of the at least one AI model other than the first AI model in the second group of AI models, whether the second AI model is deployed on the second communication apparatus comprises:

when it is determined, based on the identifier of the first AI model, that the second AI model is not deployed on the second communication apparatus, determining, based on an identifier of the third AI model, whether the second AI model is deployed on the second communication apparatus.

9. The method according to claim 7 or 8, wherein AI models in the second group of AI models satisfy: when input information of the AI models in the second group of AI models is the same, output information is the same or a difference between output information falls within a preset range.

10. The method according to any one of claims 1 to 9, wherein the identifier of the first AI model indicates at least one of the following:

a type of the first communication apparatus to which the first AI model belongs, an identifier of the first communication apparatus to which the first AI model belongs, a vendor of the first communication apparatus to which the first AI model belongs, a function of the first AI model, a scenario to which the first AI model is applicable, a dataset of the first AI model, a communication parameter to which the first AI model is applicable, or a version of the first AI model.

11. The method according to any one of claims 1 to 10, wherein the identifier of the first AI model is predefined, or is configured by a third communication apparatus.

12. The method according to any one of claims 1 to 11, wherein the method further comprises:

obtaining a validity period of the identifier of the first AI model; and

the determining, based on the identifier of the first AI model, whether a second AI model is deployed on a second communication apparatus comprises:

when it is determined, based on the validity period of the identifier of the first AI model, that the identifier of the first AI model is valid, determining, based on the identifier of the first AI model, whether the second AI model is deployed on the second communication apparatus.

13. A model matching method, wherein the method is performed by a first communication apparatus or a chip or a circuit configured for the first communication apparatus, and the method comprises:

sending, by the first communication apparatus, an identifier of a first artificial intelligence AI model, wherein the identifier of the first AI model is used to determine whether a second AI model that matches the first AI model is deployed on a second communication apparatus; and

determining, by the first communication apparatus based on a response, whether the second AI model is deployed on the second communication apparatus.

14. The method according to claim 13, wherein the method further comprises:

receiving, by the first communication apparatus, first feedback information, wherein the first feedback information is used to feed back that the second AI model is not deployed on the second communication apparatus; and

the determining, based on a response of the second communication apparatus, whether the second AI model is deployed on the second communication apparatus comprises:

determining, based on the first feedback information, that the second AI model is not deployed on the second communication apparatus.

15. The method according to claim 13, wherein the method further comprises:

receiving, by the first communication apparatus, second feedback information, wherein the second feedback information is used to feed back that the second AI model is deployed on the second communication apparatus; and

the determining, based on a response of the second communication apparatus, whether the second AI model is deployed on the second communication apparatus comprises:

determining, based on the second feedback information, that the second AI model is deployed on the second communication apparatus.

16. The method according to claim 13 or 15, wherein after the sending, by the first communication apparatus, an identifier of a first AI model, the method further comprises:

receiving, by the first communication apparatus, an identifier of the second AI model; and
determining, by the first communication apparatus based on the identifier of the second AI model, whether the first AI model matches the second AI model.

17. The method according to claim 16, wherein the second AI model belongs to a first group of AI models; the receiving, by the first communication apparatus, an identifier of the second AI model comprises:

receiving, by the first communication apparatus, the identifier of the second AI model and an identifier of at least one AI model other than the second AI model in the first group of AI models; and
the determining, by the first communication apparatus based on the identifier of the second AI model, whether the first AI model matches the second AI model comprises:
determining, by the first communication apparatus based on the identifier of the second AI model and the identifier of the at least one AI model other than the second AI model in the first group of AI models, whether the first AI model matches the at least one AI model in the first group of AI models.

18. The method according to claim 17, wherein AI models in the first group of AI models satisfy: when input information of the AI models in the first group of AI models is the same, output information is the same or a difference between output information falls within a preset range.

19. The method according to any one of claims 13 to 18, wherein the second AI model is an AI model that matches at least one AI model in a second group of AI models, and the second group of AI models comprises the first AI model; and the sending, by the first communication apparatus, an identifier of a first AI model, wherein the identifier of the first AI model is used to determine whether a second AI model that matches the first AI model is deployed on a second communication apparatus comprises:
sending, by the first communication apparatus, the identifier of the first AI model and an identifier of at least one AI model other than the first AI model in the second group of AI models, wherein the identifier of the first AI model and the identifier of the at least one AI model other than the first AI model in the second group of AI models are used to determine whether the second AI model that matches the first AI model is deployed on the second communication apparatus.

20. The method according to claim 19, wherein AI models in the second group of AI models satisfy: when input information of the AI models in the second group of AI models is the same, output information is the same or a difference between output information falls within a preset range.

21. The method according to any one of claims 13 to 20, wherein the method further comprises:

sending, by the first communication apparatus, request information, wherein the request information is used to request the identifier of the first AI model; and
receiving, by the first communication apparatus, the identifier of the first AI model.

22. The method according to claim 21, wherein the request information comprises at least one of the following:
a type of the first communication apparatus to which the first AI model belongs, an identifier of the first communication apparatus to which the first AI model belongs, a vendor of the first communication apparatus to which the first AI model belongs, a function of the first AI model, a scenario to which the first AI model is applicable, a dataset of the first AI model, a communication parameter to which the first AI model is applicable, or a version of the first AI model.

23. The method according to any one of claims 13 to 20, wherein the method further comprises:
sending, by the first communication apparatus, registration information, wherein the registration information comprises the identifier of the first AI model, and the registration information is used to register the identifier of the first AI model.

24. The method according to any one of claims 13 to 23, wherein the identifier of the first AI model indicates at least one of the following:
a type of the first communication apparatus to which the first AI model belongs, an identifier of the first communication apparatus to which the first AI model belongs, a vendor of the first communication apparatus to which the first AI model belongs, a function of the first AI model, a scenario to which the first AI model is applicable, a dataset of the first AI model, a communication parameter to which the first AI model is applicable, or a version of the first AI model.

25. The method according to any one of claims 13 to 24, wherein the method further comprises:
    sending, by the first communication apparatus, a validity period of the first AI model.

26. A model matching method, comprising:

    receiving request information from a first communication apparatus, wherein the request information is used to request an AI model that matches a first artificial intelligence AI model; and
    determining, in response to the request information, whether a second AI model is deployed on the second communication apparatus, wherein the second AI model is an AI model that matches at least one AI model in a second group of AI models, and the second group of AI models comprises the first AI model.

27. The method according to claim 26, wherein when it is determined that the second AI model is deployed on the second communication apparatus, the method further comprises:
    determining that each AI model in a first group of AI models matches each AI model in the first group of AI models, wherein the first group of AI models comprises the second AI model.

28. The method according to claim 26 or 27, wherein AI models in the first group of AI models satisfy: when input information of the AI models in the first group of AI models is the same, output information is the same or a difference between output information falls within a preset range.

29. The method according to any one of claims 26 to 28, wherein AI models in the second group of AI models satisfy: when input information of the AI models in the second group of AI models is the same, output information is the same or a difference between output information falls within a preset range.

30. A communication method, comprising:

    sending request information, wherein the request information is used to request an identifier of an artificial intelligence AI model; and
    receiving the identifier of the AI model.

31. The method according to claim 30, wherein the request information comprises at least one of the following: a type of a communication apparatus to which the AI model belongs, an identifier of the communication apparatus to which the AI model belongs, a vendor of the communication apparatus to which the AI model belongs, a function of the AI model, a scenario to which the AI model is applicable, a dataset of the AI model, a communication parameter to which the AI model is applicable, or a version of the AI model.

32. A communication method, comprising:

    receiving request information, wherein the request information is used to request an identifier of an artificial intelligence AI model;
    determining the identifier of the AI model in response to the request information; and
    sending the identifier of the AI model.

33. The method according to claim 32, wherein the request information comprises at least one of the following: a type of a communication apparatus to which the AI model belongs, an identifier of the communication apparatus to which the AI model belongs, a vendor of the communication apparatus to which the AI model belongs, a function of the AI model, a scenario to which the AI model is applicable, a dataset of the AI model, a communication parameter to which the AI model is applicable, or a version of the AI model.

34. A communication method, comprising:

    obtaining an identifier of an artificial intelligence AI model; and
    sending registration information, wherein the registration information comprises the identifier of the AI model, and the registration information is used to register the identifier of the AI model.

35. The method according to claim 34, wherein the identifier of the AI model indicates at least one of the following: a type of a communication apparatus to which the AI model belongs, an identifier of the communication apparatus to which the AI model belongs, a vendor of the communication apparatus to which the AI model belongs, a function of the AI model, a scenario to which the AI model is applicable, a dataset of the AI model, a communication parameter to which the AI model is applicable, or a version of the AI model.

36. A communication method, comprising:

receiving registration information, wherein the registration information comprises an identifier of an artificial intelligence AI model, and the registration information is used to register the identifier of the AI model; and storing the identifier of the AI model in response to the registration information.

37. The method according to claim 36, wherein the identifier of the AI model indicates at least one of the following: a type of a communication apparatus to which the AI model belongs, an identifier of the communication apparatus to which the AI model belongs, a vendor of the communication apparatus to which the AI model belongs, a function of the AI model, a scenario to which the AI model is applicable, a dataset of the AI model, a communication parameter to which the AI model is applicable, or a version of the AI model.

38. A communication apparatus, comprising a module or a unit configured to perform the method according to any one of claims 1 to 12.

39. A communication apparatus, comprising a module or a unit configured to perform the method according to any one of claims 13 to 25.

40. A communication apparatus, comprising a module or a unit configured to perform the method according to any one of claims 26 to 29.

41. A communication apparatus, comprising a module or a unit configured to perform the method according to claim 30 or 31.

42. A communication apparatus, comprising a module or a unit configured to perform the method according to claim 32 or 33.

43. A communication apparatus, comprising a module or a unit configured to perform the method according to claim 34 or 35.

44. A communication apparatus, comprising a module or a unit configured to perform the method according to claim 36 or 37.

45. A communication apparatus, comprising a processor, wherein the processor is configured to execute a computer program or instructions stored in a memory, so that the apparatus performs the method according to any one of claims 1 to 12, the apparatus performs the method according to any one of claims 13 to 25, the apparatus performs the method according to any one of claims 26 to 29, the apparatus performs the method according to claim 30 or 31, the apparatus performs the method according to claim 32 or 33, the apparatus performs the method according to claim 34 or 35, or the apparatus performs the method according to claim 36 or 37.

46. The apparatus according to claim 45, wherein the apparatus further comprises the memory and/or a communication interface, and the communication interface is coupled to the processor; and the communication interface is configured to: input and/or output information.

47. The apparatus according to any one of claims 38 to 46, wherein the apparatus is any one of the following: a chip, a chip system, or a circuit.

48. A computer-readable storage medium, wherein the computer-readable storage medium stores a computer program or instructions, and when the computer program or the instructions are run on a communication apparatus, the communication apparatus is enabled to perform the method according to any one of claims 1 to 12, the apparatus is enabled to perform the method according to any one of claims 13 to 25, the apparatus is enabled to perform the method according to any one of claims 26 to 29, the apparatus is enabled to perform the method according to claim 30 or 31, the apparatus is enabled to perform the method according to claim 32 or 33, the apparatus is enabled to perform the method according to claim 34 or 35, or the apparatus is enabled to perform the method according to claim 36 or 37.

49. A computer program product, wherein the computer program product comprises a computer program or instructions used to perform the method according to any one of claims 1 to 12, the computer program product comprises a computer program or instructions used to perform the method according to any one of claims 13 to 25, the computer program product comprises a computer program or instructions used to perform the method according to any one of claims 26 to 29, the computer program product comprises a computer program or instructions used to perform the method according to claim 30 or 31, the computer program product comprises a computer program or instructions used to perform the method according to claim 32 or 33, the computer program product comprises a computer program or instructions used to perform the method according to claim 34 or 35, or the computer program product comprises a computer program or instructions used to perform the method according to claim 36 or 37.

50. A chip, wherein the chip is coupled to a memory, and is configured to: read and execute program instructions stored in the memory, to implement the method according to any one of claims 1 to 12, implement the method according to any one of claims 13 to 25, implement the method according to any one of claims 26 to 29, implement the method according to claim 30 or 31, implement the method according to claim 32 or 33, implement the method according to claim 34 or 35, or implement the method according to claim 36 or 37.

51. A communication system, comprising the communication apparatus according to claim 38 and the communication apparatus according to claim 39.

52. A communication system, comprising the communication apparatus according to claim 41 and the communication apparatus according to claim 42.

53. A communication system, comprising the communication apparatus according to claim 43 and the communication apparatus according to claim 44.

FIG. 1

FIG. 2

FIG. 3

FIG. 4

Two-sided model

FIG. 5

600

Receive an identifier of a first AI model from a first communication apparatus — 610

Determine, based on the identifier of the first AI model, whether a second AI model is deployed on a second communication apparatus, where the second AI model is an AI model that matches the first AI model — 620

FIG. 6

AI model group #A

AI model group #B

FIG. 7

| Type identifier | Apparatus identifier | Vendor identifier | Function identifier | Scenario identifier | Dataset identifier | Communication parameter identifier | Version identifier |
|---|---|---|---|---|---|---|---|

FIG. 8

EP 4 586 091 A1

| Vendor identifier | Function identifier | Scenario identifier | Version identifier |
|---|---|---|---|

(1)

| Apparatus identifier | Function identifier | Scenario identifier | Vendor identifier | Version identifier |
|---|---|---|---|---|

(2)

FIG. 9

| Type identifier | Apparatus identifier | Vendor identifier | Function identifier |
|---|---|---|---|

(1)

| Type identifier | Apparatus identifier | Vendor identifier | Function identifier | Version identifier |
|---|---|---|---|---|

(2)

FIG. 10

First communication apparatus

Another apparatus

Determine an identifier of a first AI model

Registration information, including the identifier of the first AI model

Response to the registration information

FIG. 11

First communication apparatus

Another apparatus

Request information

Determine an identifier of a first AI model

Identifier of the first AI model

FIG. 12

1300

```
┌──────────────────────┐                    ┌──────────────────────┐
│ First communication  │                    │ Second communication │
│     apparatus        │                    │     apparatus        │
└──────────────────────┘                    └──────────────────────┘
          │                                            │
          │        1310. Identifiers of T AI models    │
          │───────────────────────────────────────────▶│
          │                                            │
          │                         ┌──────────────────────────────────┐
          │                         │ 1320. Determine, based on the    │
          │                         │ identifiers of the T AI models,  │
          │                         │ whether the second communication │
          │                         │ apparatus has an AI model that   │
          │                         │ matches the T AI models          │
          │                         └──────────────────────────────────┘
┌─────────────────────────────────────────────────────────────────────┐
│ 1330. The first communication apparatus determines, based on a       │
│ response of the second communication apparatus, whether the second   │
│ communication apparatus has an AI model that matches the T AI         │
│                             models.                                   │
└─────────────────────────────────────────────────────────────────────┘
          │                                            │
```

FIG. 13

1400

```
┌──────────────────────┐                    ┌──────────────────────┐
│ First communication  │                    │ Second communication │
│     apparatus        │                    │     apparatus        │
└──────────────────────┘                    └──────────────────────┘
          │                                            │
          │        1410. Identifiers of T AI models    │
          │───────────────────────────────────────────▶│
          │                                            │
          │                         ┌──────────────────────────────────┐
          │                         │ 1420. Determine, based on the    │
          │                         │ identifiers of the T AI models, N AI│
          │                         │ models that match the T AI models in │
          │                         │ the second communication apparatus │
          │                         └──────────────────────────────────┘
          │        1430. Identifiers of the N AI models │
          │◀───────────────────────────────────────────│
          │                                            │
┌──────────────────────────────┐                       │
│ 1440. Determine whether the first │                   │
│ communication apparatus has an AI │                   │
│ model that matches the N AI models│                   │
└──────────────────────────────┘                       │
  ┌ ─ ─ ─ ─ ─ ─ ─ ─ ─ ─ ─ ─ ─ ─ ─ ─ ─ ─ ─ ─ ─ ─ ─ ─ ─ ─ ┐
  │ 1450. The second communication apparatus determines a matching │
  │ result of the first communication apparatus based on a response of the │
  │              first communication apparatus                     │
  └ ─ ─ ─ ─ ─ ─ ─ ─ ─ ─ ─ ─ ─ ─ ─ ─ ─ ─ ─ ─ ─ ─ ─ ─ ─ ─ ┘
          │                                            │
```

FIG. 14

1500

```
┌─────────────────────┐              ┌─────────────────────┐
│  First communication │              │ Second communication│
│      apparatus       │              │      apparatus      │
└─────────────────────┘              └─────────────────────┘
```

1510. Identifiers of T AI models and/or
identifier of at least one AI model in a
same group as the T AI models

1520. Determine whether the second
communication apparatus has an AI
model that matches at least one of the
following AI models: the T AI
models and the at least one AI model
in the same group as the T AI models

1530. The first communication apparatus determines, based on a
response of the second communication apparatus, whether the second
communication apparatus has an AI model that matches at least one
of the following AI models: the T AI models and the at least one AI
model in the same group as the T AI models

FIG. 15

1600

```
First communication                           Second communication
    apparatus                                      apparatus

         │ 1610. Identifiers of T AI models and/or      │
         │ identifier of at least one AI model in a      │
         │    same group as the T AI models              │
         ├──────────────────────────────────────────────►│
         │                                                │
         │        ┌───────────────────────────────────────────────┐
         │        │ 1620. Determine N AI models that match        │
         │        │ at least one of the following AI models in    │
         │        │ the second communication apparatus: the       │
         │        │ T AI models and the at least one AI model     │
         │        │ in the same group as the T AI models          │
         │        └───────────────────────────────────────────────┘
         │                                                │
         │ 1630. Identifiers of the N AI models and/      │
         │ or identifier of at least one AI model in a    │
         │    same group as the N AI models               │
         │◄──────────────────────────────────────────────┤
 ┌──────────────────────────────────────────────┐        │
 │ 1640. Determine whether the first            │        │
 │ communication apparatus has an AI model that │        │
 │ matches at least one of the following AI      │        │
 │ models: the N AI models and the at least one AI│       │
 │ model in the same group as the N AI models    │        │
 └──────────────────────────────────────────────┘        │
```

┌─────────────────────────────────────────────────────────────────────────────┐
│ 1650. The second communication apparatus determines a matching               │
│ result of the first communication apparatus based on a response of the       │
│ first communication apparatus                                                │
└─────────────────────────────────────────────────────────────────────────────┘

FIG. 16

1700

```
┌─────────────────────────────────────────────────┐
│                                                 │
│   ┌─────────────────────────────────────────┐   │
│   │                                         │   │
│   │        Transceiver unit 1710            │   │
│   │                                         │   │
│   └─────────────────────────────────────────┘   │
│                      │                          │
│   ┌─────────────────────────────────────────┐   │
│   │                                         │   │
│   │        Processing unit 1720             │   │
│   │                                         │   │
│   └─────────────────────────────────────────┘   │
│                                                 │
└─────────────────────────────────────────────────┘
```

FIG. 17

1800

Processor 1810

Transceiver 1830

Memory 1820

FIG. 18

Chip system 1900

Logic circuit 1910

Input/Output interface 1920

FIG. 19

## INTERNATIONAL SEARCH REPORT

| International application No. |
|---|
| **PCT/CN2023/119662** |

**A. CLASSIFICATION OF SUBJECT MATTER**

G06F9/50(2006.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT, EPTXT, USTXT, WOTXT, CNKI, ISI: 编码, 解码, 模型, 部署, 查询, 搜索, 确定, 关联, 匹配, 适配, 设备, 终端, 算法, encode, decode, model, search, match, AI, terminal

**C. DOCUMENTS CONSIDERED TO BE RELEVANT**

| Category* | Citation of document, with indication, where appropriate, of the relevant passages | Relevant to claim No. |
|---|---|---|
| X | WO 2021179165 A1 (GUANGDONG OPPO MOBILE TELECOMMUNICATIONS CORP., LTD.) 16 September 2021 (2021-09-16) <br> description, page 4 line 17-page 9 line 10, and figures 2-9 | 1-4, 10-16, 21-26, 30-53 |
| A | CN 111083722 A (ZTE CORP.) 28 April 2020 (2020-04-28) <br> entire document | 1-53 |
| A | CN 111026436 A (ALIPAY (HANGZHOU) INFORMATION TECHNOLOGY CO., LTD.) 17 April 2020 (2020-04-17) <br> entire document | 1-53 |
| A | CN 114978382 A (HUAWEI TECHNOLOGIES CO., LTD.) 30 August 2022 (2022-08-30) <br> entire document | 1-53 |
| A | CN 112925558 A (ALIPAY (HANGZHOU) INFORMATION TECHNOLOGY CO., LTD.) 08 June 2021 (2021-06-08) <br> entire document | 1-53 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **15 November 2023** | **23 November 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119662**

| Patent document cited in search report | | | Publication date (day/month/year) | Patent family member(s) | | | Publication date (day/month/year) |
|---|---|---|---|---|---|---|---|
| WO | 2021179165 | A1 | 16 September 2021 | US | 2023004839 | A1 | 05 January 2023 |
| | | | | EP | 4113300 | A1 | 04 January 2023 |
| CN | 111083722 | A | 28 April 2020 | EP | 3958606 | A1 | 23 February 2022 |
| | | | | WO | 2020211722 | A1 | 22 October 2020 |
| | | | | US | 2022197953 | A1 | 23 June 2022 |
| CN | 111026436 | A | 17 April 2020 | WO | 2021114933 | A1 | 17 June 2021 |
| CN | 114978382 | A | 30 August 2022 | | None | | |
| CN | 112925558 | A | 08 June 2021 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211197193